# EUROPEAN PATENT SPECIFICATION

(11) **EP 1 470 456 B1**
(45) Date of publication and mention of the grant of the patent: **30.12.2009**
(21) Application number: 03707570.2
(22) Date of filing: 28.01.2003
(51) Int. Cl.: G05B 15/02

(54) **BUILDING CONTROL SYSTEM AND FUME HOOD SYSTEM FOR USE THEREIN HAVING REDUCED WIRING REQUIREMENTS**
GEBAUDEAUTOMATISIERUNGSSYSTEM UND DAFÜR ENTSPRECHENDES RAUCHABZUGSSYSTEM MIT VERMINDERTEN VERDRAHTUNGSANFORDERUNGEN
SYSTEME DE COMMANDE D'IMMEUBLE ET SON SYSTEME DE HOTTE DE CAPTATION DES FUMEES A BESOINS EN CABLAGES REDUITS

(30) Priority: 28.01.2002 US 352452 P
(43) Date of publication of application: 27.10.2004
(73) Proprietor: Siemens Building Technologies, Inc., Buffalo Grove, Illinois 60089 (US)
(72) Inventor: AHMED, Osman, Hawthorn Woods, IL 60047 (US)
(74) Representative: Maier, Daniel Oliver
(86) International application number: PCT/US2003/002559
(87) International publication number: WO 2003/065136

(56) References cited:
- WO-A-01/26330
- WO-A-01/35190
- US-A- 5 562 537
- US-A1- 2001 025 349
- US-A1- 2001 040 509
- US-B1- 6 199 575

## Description

### Field of the Invention

The present invention relates generally to building control systems, such of the type that control heating, ventilation, air conditioning, fire safety, lighting, security and other systems of a building or facility.

US 2001/0025349 A1 shows a building control system using wireless communication in connection with heating, ventilation and air-conditioning, and furthermore US 2001/0040509 A1 describes to use wireless communication in connection with gas monitoring systems.

### Background of the Invention

Building control systems are employed to regulate and control various environmental and safety aspects of commercial, industrial and residential facilities (hereinafter referred to as "buildings"). In ordinary single-family residences, control systems tend to be simple and largely unintegrated. However, in large buildings, building control systems often consist of multiple, integrated subsystems employing hundreds of elements.

For example, a heating, ventilation and air-conditioning ("HVAC") building control system interrelates small, local control loops with larger control loops to coordinate the delivery of heat, vented air, and chilled air to various locations throughout a large building. Local control systems may use local room temperature readings to open or close vents that supply heated or chilled air. Larger control loops may obtain many temperature readings and/or air flow readings to control the speed of a ventilation fan, or control the operation of heating or chilling equipment.

As a consequence of the interrelationship of these control loops, many elements of a building control system must communicate information to each other. To this end, communication networks have been incorporated that transmit digital data between and among the various elements in accordance with one or more sets of protocols. By way of example, one or more local area networks using Ethernet or other standard protocols are often used to effect communication between elements and subsystems.

A drawback to the current state of HVAC systems is the amount of wiring involved in connecting all of the elements of the system in a large building. A large building may have hundreds of sensors, room controllers, and actuation devices. All of these elements must be interconnected in some manner so that both local and overall control operations may be carried out. Installation of the large number of wires required to accomplish such interconnection is labor intensive, and requires significant material cost.

Such problems are found in a variety of building control installations, including those used to protect the safety of processes using fume hoods. Fume hoods are devices known in the art that isolate noxious gasses created during experimentation or other chemical processes. Typical safety controls associated with prior art fume hoods were cumbersome and required significant amounts of wiring and control equipment.

As a consequence, there is a need for a building control system that reduces the wiring requirements of the current systems, including those systems that incorporate fume hoods.

### Summary of the Invention

The present addresses the above needs, as well as others, by providing a building control system that incorporates wireless communications and/or microelectromechanical ("MEMS") technology. By incorporating wireless communications, at least some of the wiring employed for data communication may be eliminated. Preferably, such a system employs MEMS sensor elements that may be incorporated into sensor modules that include both the sensor element and a local RF communication circuit. By employing MEMS sensor elements and local RF communication circuits, power requirements are reduced, and sensors may be implemented with stand-alone power sources, for example, batteries. Battery powered sensor modules may be implemented completely without wiring. Such modules may be used to sense noxious gas concentration within a fume hood.

A first embodiment of the invention is a controller arrangement for a building system that includes a first module, a second module, and a controller. The first module includes a first wireless communication device and a first microelectromechanical sensor device operable to generate a process value representative of a concentration of a first set of gaseous substances within a fume hood. The second module has a second wireless communication device and is operably coupled to an actuation element. The controller, which may be part of the first module, second module, neither or both, is operable to obtain the process value from the first module and provide a control output to the second module. The controller is further operable to communicate with at least one of the sensor module and the actuator module using wireless communications.

A second embodiment of the invention is an apparatus that includes a first microelectromechanical sensor device and a wireless communication device. The first microelectromechanical sensor device is operable to generate a process value representative of a concentration of a first set of gaseous substances in a space. The wireless communication device is operably coupled to the first microelectromechanical sensor device and is operable to transmit first information to a control device. The first information is based on the process value. The control device is operable to adjust an air flow to affect the concentration of the first gas substance in the space based on the first information.

The above described features and advantages, as well as others, will become more readily apparent to those of ordinary skill in the art by reference to the following detailed description and accompanying drawings.

### Brief Description of the Drawings

Fig. 1 shows a block diagram of an exemplary building control system in accordance with the present invention;
Fig-2 shows a block diagram of an exemplary space control subsystem of the building control system of Fig. 1;
Fig. 3 shows a flow diagram of an exemplary set of operations of a room control processor of the space control subsystem of Fig. 2;
Fig. 4 shows a flow diagram of an exemplary set of operations of a sensor module controller of the space control subsystem of Fig. 2; and
Fig. 5 shows a flow diagram of an exemplary set of operations of an actuator module controller of the space control subsystem of Fig. 2.
Fig. 6 shows a block diagram of a space control subsystem of the building control system of Fig. 1 that includes a plurality of fume hoods in accordance with the invention;
Fig. 7a shows a block diagram of a control module of the space control subsystem of Fig. 6;
Fig. 7b shows a flow diagram of the operations of the processing circuit of the control module of Fig. 7a;
Fig. 8a shows a block diagram of a supply module of the space control subsystem of Fig. 6;
Fig. 8b shows a first flow diagram of the operations of the processing circuit of the supply module of Fig. 8a;
Fig. 8c shows a second flow diagram of the operations of the processing circuit of the supply module of Fig. 8a;
Fig. 9a shows a block diagram of a main exhaust module of the space control subsystem of Fig. 6;
Fig. 9b shows a flow diagram of the operations of the processing circuit of the main exhaust module of Fig: 9a
Fig. 10a shows a block diagram of a fume hood sensor module of the space control subsystem of Fig. 6;
Fig. 10b shows a flow diagram of the operations of the processing circuit of the fume hood sensor module of Fig. 10a;
Fig. 11 a shows a block diagram of a fume hood exhaust module of the space control subsystem of Fig. 6;
Fig. 11b shows a flow diagram of the operations of the processing circuit of the fume hood exhaust module of Fig. 11a;
Fig. 12a shows a representative side view of a control system module according to an aspect of the invention; and
Fig. 12b shows a representative block diagram of the control system module of Fig. 12a.

### Detailed Description

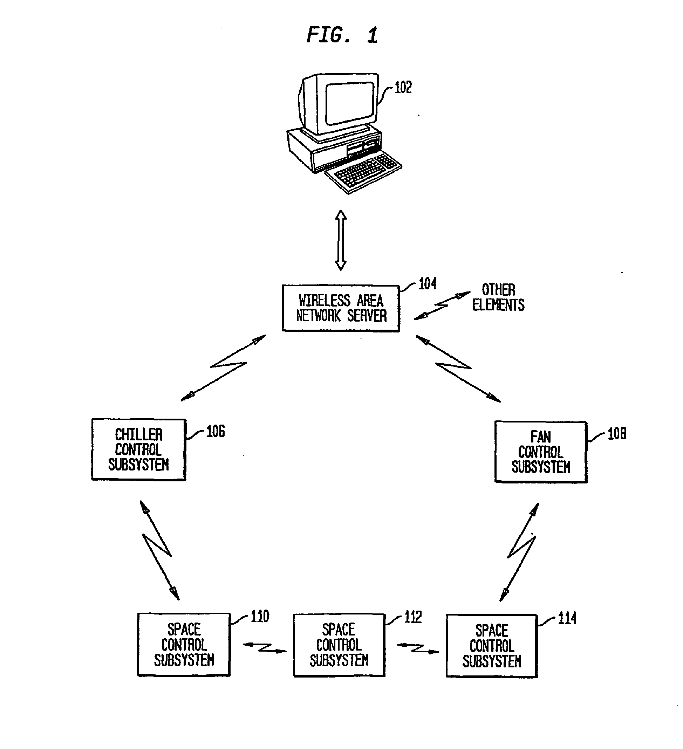

Fig. 1 shows a block diagram of an exemplary building control system in accordance with the present invention. The building control system 100 includes a supervisory computer 102, a wireless area network server 104, a chiller controller subsystem 106, a fan controller subsystem 108, and room controller subsystems 110, 112 and 114. The building control system 100 includes only the few above-mentioned elements for clarity of exposition of the principles of the invention. Typical building control systems will include many more space control subsystems, as well as many more chiller, fan, heater, and other building HVAC subsystems. Those of ordinary skill in the art may readily incorporate the methods and features of the invention described herein into building control systems of larger scale.

In general, the building control system 100 employs a first wireless communication scheme to effect communications between the supervisory computer 102, the chiller controller subsystem 106, the fan controller subsystem 108, and the room controller subsystems 110, 112 and 114. A wireless communication scheme identifies the specific protocols and RF frequency plan employed in wireless communications between sets of wireless devices. In the embodiment described herein, the first wireless communication scheme is implemented as a wireless area network. To this end, a wireless area network server 104 coupled to the supervisory computer 102 employs a packet-hopping wireless protocol to effect communication by and among the various subsystems of the building control system 100. U.S. Patent No. 5,737,318, describes a wireless packet hopping network that is suitable for HVAC/building control systems of substantial size.

In general, the chiller controller subsystem 106 is a subsystem that is operable to control the operation of a chiller plant, not shown, within the building. Chiller plants, as is known in art, are systems that are capable of chilling air that may then be ventilated throughout all or part of the building to enable air conditioning. Various operations of chiller plants depend upon a number of input values, as is known in the art. Some of the input values may be generated within the chiller controller subsystem 106, and other input values are externally generated. For example, operation of the chiller plant may be adjusted based on various air flow and/or temperature values generated throughout the building. The operation of the chiller plant may also be affected by set point values generated by the supervisory computer 102. The externally-generated values are communicated to the chiller controller subsystem 106 using the wireless area network.

The fan controller subsystem 108 is a subsystem that is operable to control the operation of a ventilation fan, not shown, within the building. A ventilation fan, as is known in art, is a prime mover of air flow throughout the ventilation system of the building. This primary air flow power may be used to refresh the air within the facility, and may be used to distribute chilled air from the chiller plant. As with the chiller plant, ventilation fans and their implementation within building control systems are well known in the art. Also, the fan controller subsystem 108 is similarly configured to receive input values from other subsystems (or the supervisory computer 102) over the wireless area network.

The room controllers 110, 112 and 114 are local controller subsystems that operate to control an environmental aspect of a location or "space" within the building. While such locations may be referred to herein as "rooms" for convenience, it will be appreciated that such locations may further be defined zones within larger open or semi-open spaces of a building. The environmental aspect(s) that are controllable by the space control subsystems 110, 112 and 114 typically include temperature, and may include air quality, lighting and other building system processes.

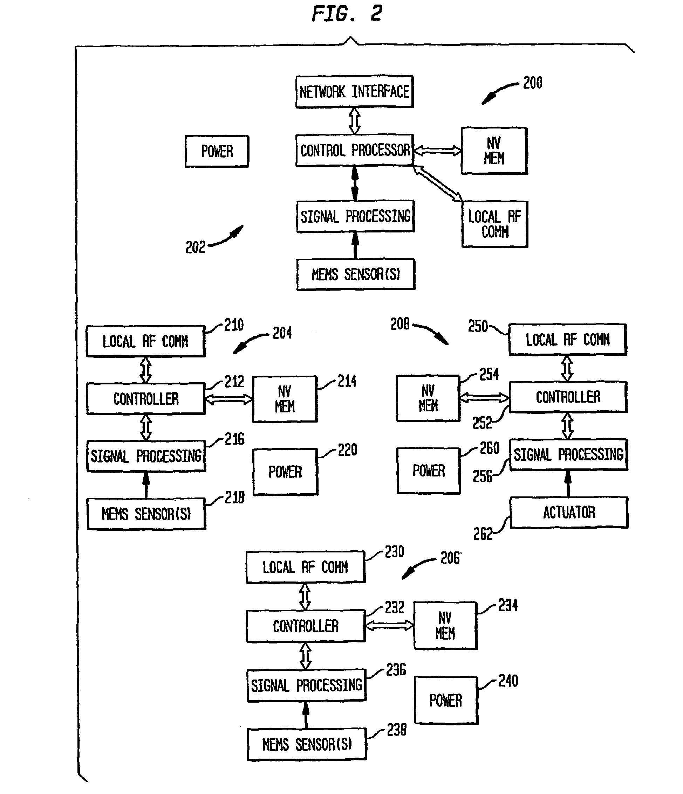

In accordance with one aspect of the present invention, each of the space control subsystems 110, 112 and 114 has multiple elements that communicate with each other using a second wireless communication scheme. In general, it is preferable that the second communication scheme employ a short-range or local RF communication sheme such as Bluetooth. Fig. 2, discussed further below, shows a schematic block diagram of an exemplary room control system that may be used as the space control subsystems 110.

Referring to Fig. 2, the space control subsystem 110 includes a hub module 202; first and second sensor modules 204 and 06 respectively, and an actuator module 208. It will be appreciated that a particular room controller subsystem 200 may contain more or less sensor modules or actuator modules. In the exemplary embodiment described herein, the space control subsystem 110 is operable to assist in regulating the temperature within a room or space pursuant to a set point value. The space control subsystem 110 is further operable to obtain data regarding the general environment of the room for use, display or recording by a remote device, not shown in Fig. 2, of the building control system. (E.g., supervisory computer 102 of Fig. 1).

The first sensor module 204 represents a temperature sensor module and is preferably embodied as a wireless integrated network sensor that incorporates microelectromechanical system technology ("MEMS"). By way of example, in the exemplary embodiment described herein, the first sensor module 204 includes a MEMS local RF communication circuit 210, a microcontroller 212, a programmable non-volative memory 214, a signal processing circuit 216, and one or more MEMS sensor devices 218. The first sensor module 204 also contains a power supply/source 220. In the preferred embodiment described herein, the power supply/source 220 is a battery, for example, a coin cell battery.

Examples of MEMS circuits suitable for implementing the first sensor module 204 are described in the ESSCIRC98 Presentation "Wireless Integrated Network Sensors (WINS)", which is published on-line at www.janet.ucla.edu/WINS/archives, (hereinafter referred to as the "WINS Presentation").

The MEMS sensor device(s) 218 include at least one MEMS sensor, which may suitably be a temperature sensor, flow sensor, pressure sensor, and/or gas-specific sensor. MEMS devices capable of obtaining temperature, flow, pressure and gas content readings have been developed and are known in the art. In a preferred embodiment, several sensors are incorporated into a single device as a sensor suite 218. Upon installation, the sensor module 204 may be programmed to enable the particular sensing capability. By incorporating different, selectable sensor capabilities, a single sensor module design may be manufactured for use in a large majority of HVAC sensing applications. In the embodiment of Fig. 2, the sensor module 204 is configured to enable its *temperature* sensing function.

The signal processing circuit 216 includes the circuitry that interfaces with the sensor, converts analog sensor signals to digital signals, and provides the digital signals to the microcontroller 212. Examples of low power, micro-electronic A/D converters and sensor interface circuitry are shown in the WINS Presentation.

The programmable non-volatile memory 214, which may be embodied as a flash programmable EEPROM, stores configuration information for the sensor module 204. By way of example, programmable non-volatile memory 214 preferably includes system identification information, which is used to associate the information generated by the sensor module 204 with its physical and/or logical location in the building control system. For example, the programmable non-volatile memory 214 may contain an "address" or "ID" of the sensor module 204 that is appended to any communications generated by the sensor module 110.

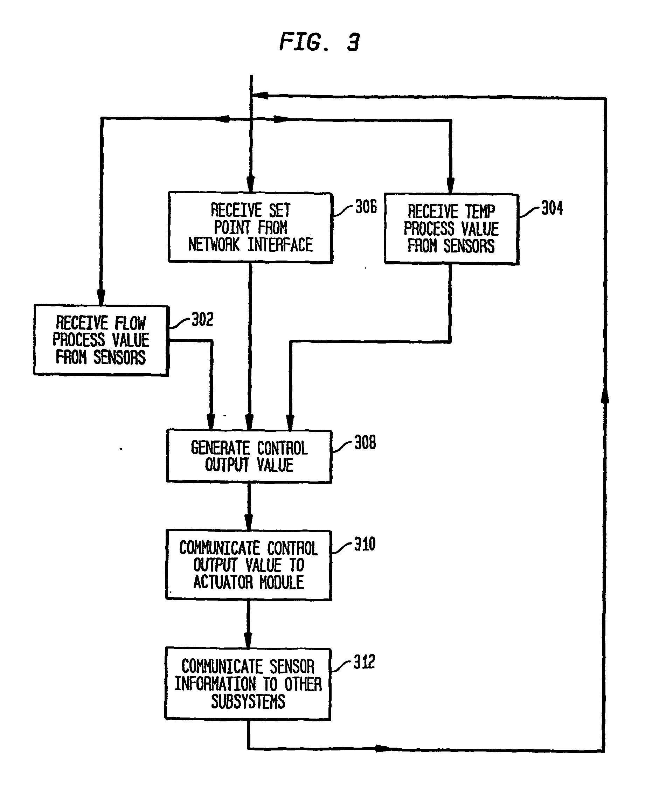

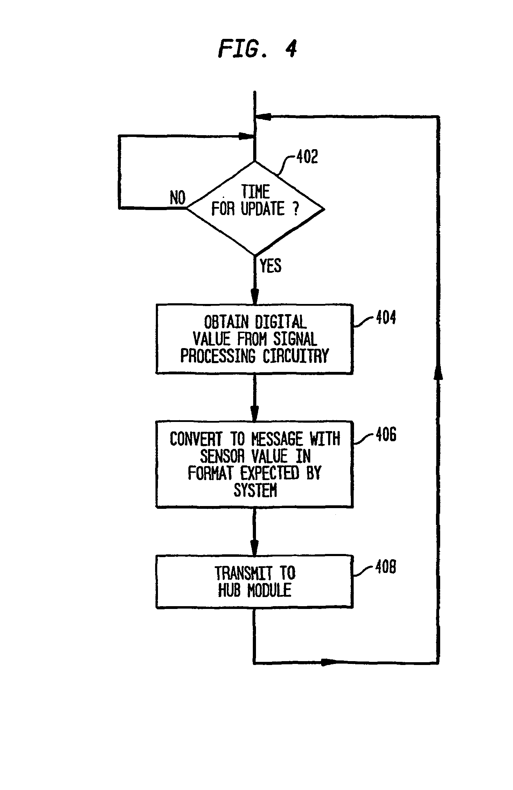

The memory 214 further includes set-up configuration information related to the type of sensor being used. For example, if the sensor device(s) 218 are implemented as a suite of sensor devices, the memory 214 includes the information that identifies which sensor functionality to enable. (See Figs. 3 and 4, discussed further below). The memory 214 may further include calibration information regarding the sensor, and system RF communication parameters (i.e. the second RF communication scheme) employed by the microcontroller 212 and/or RF communication circuit 210 to transmit information to other devices.

The microcontroller 212 is a processing circuit operable to control the general operation of the sensor module 204. In general, however, the microcontroller 212 receives digital sensor information from the signal processing circuit 216 and provides the information to the local RF communication circuit 210 for transmission to a local device, for example, the hub module 202. The microcontroller 212 may cause the transmission of sensor data from time-to-time as dictated by an internal counter or clock, or in response to a request received from the hub module 202.

The microcontroller 212 is further operable to receive configuration information via the RF communication circuit 210, store configuration information in the memory 214, and perform operations in accordance with such configuration information. As discussed above, the configuration information may defme which of multiple possible sensor functionalities is to be provided by the sensor module 204. The microcontroller 212 employs such information to cause the appropriate sensor device or devices from the sensor device suite 218 to be operably connected to the signal processing circuit such that sensed signals from the appropriate sensor device are digitized and provided to the microcontroller 212. As discussed above, the microcontroller 212 may also use the configuration information to format outgoing messages and/or control operation of the RF communication circuit 210.

The MEMS local RF communication circuit 210 may suitably include a Bluetooth RF modem, or some other type of short range (about 30 - 100 feet) RF communication modem. The use of a MEMS-based RF communication circuit allows for reduced power consumption, thereby enabling the potential use of a true wireless, battery operated sensor module 204. A suitable exemplary MEMS-based RF communication circuit is discussed in the WINS Presentation.

As discussed above, it is assumed that the sensor module 204 is configured to operate as a temperature sensor. To this end, the memory 214 stores information identifying that the sensor module 204 is to operate as a temperature sensor. Such information may be programmed into the memory 214 via a wireless programmer. The module 204 may be programmed upon shipment from the factory, or upon installation into the building control system. The microcontroller 212, responsive to the configuration information, causes the signal processing circuit 216 to process signals only from the temperature sensor, ignoring output from other sensors of the sensor suite 218.

It will be appreciated that in other embodiments, the sensor suite 218 may be replaced by a single sensor. However, additional advantages may be realized through the use of a configurable sensor module capable of performing any of a plurality of sensor functions. As discussed further above, these advantages include the reduction of the number of sensor module designs.

In addition, the reduced wiring requirements and the reduced power consumption of the above described design provides benefits even in non-battery operated sensors.

The sensor module 206 is configured to operate as a flow sensor in the embodiment described herein. The sensor module 206 may suitably have the same physical construction as the sensor module 204. To this end, the sensor module 206 includes a local RF communication circuit 230, a microcontroller 232, a programmable non-volatile memory 234, a signal processing circuit 236, a sensor suite 238, and a power supply/source 240. In contrast to the sensor module 204, however, the memory 234 of the sensor module 206 contains configuration information identifying that the sensor module 206 is to function as a flow sensor.

The actuator module 208 is a device that is operable to cause movement or actuation of a physical device that has the ability to change a parameter of the building environment. For example, the actuator module 208 in the embodiment described herein is operable to control the position of a ventilation damper, thereby controlling the flow of heated or chilled air into the room.

The actuator module 208 is also preferably embodied as a wireless integrated network device that incorporates microelectromechanical system ("MEMS") devices. By way of example, in the exemplary embodiment described herein, the actuator module 208 includes a MEMS local RF communication circuit 250, a microcontroller 252, a programmable non-volatile memory 254, and a signal processing circuit 256. The actuator module 208 also contains a power supply/source 260. In the preferred embodiment described herein, the power supply/source 260 is a battery, for example, a coin cell battery. However, it will be appreciated that if AC power is necessary for the actuator device (i.e. the damper actuator), which may be solenoid or value, then AC power is readily available for the power supply/source 260. As a consequence, the use of battery power is not necessarily advantageous.

The actuator 262 itself may suitably be a solenoid, stepper motor, or other electrically controllable device that drives a mechanical HVAC element. In the exemplary embodiment described herein, the actuator 262 is a stepper motor for controlling the position of a vent damper.

The MEMS local RF communication circuit 250 may suitably be of similar construction and operation as the MEMS local RF communication circuit 210. Indeed, even if the MEMS local RF communication circuit 250 differs from the RF communication circuit 210, it nevertheless should employ the same communication scheme.

The microcontroller 252 is configured to receive control data messages via the RF communication circuit 250. In the embodiment described herein, the control data messages are generated and transmitted by the hub module 202. The control data messages typically include a control output value intended to control the operation of the actuator 262. Accordingly, the microcontroller 252 is operable to obtain the control output value from a received message and provide the control output value to the signal processing circuit 256. The signal processing circuit 256 is a circuit that is configured to generate an analog control signal from the digital control output value. In other words, the signal processing circuit 256 operates as an analog driver circuit. The signal processing circuit 256 includes an output 258 for providing the analog control signal to the actuator 262.

The non-volatile memory 254 is a memory that contains configuration and/or calibration information related to the implementation of the actuator 262. The memory 254 may suitably contain sufficient information to effect mapping between the control variables used by the hub module 202 and the control signals expected by the actuator 262. For example, the control variables used by the hub module 202 may be digital values representative of a desired damper position charge. The actuator 262, however, may expect an analog voltage that represents an amount to rotate a stepper motor. The memory 254 includes information used to map the digital values to the expected analog voltages.

The hub module 202 in the exemplary embodiment described herein performs the function of the loop controller (e/g a PID controller) for the space control subsystem 110. The hub module 202 obtains process variable values (*i.e*. sensor information) from either or both of the sensor modules 204 and 206 and generates control output values. The hub module 202 provides the control output values to the actuator module 208. The hub module 202 also communicates with external elements of the building control system, for example, the supervisory computer, fan or chiller control subsystems, and other room controller subsystems.

In the exemplary embodiment described herein, the hub module 202 further includes sensor functionality. In general, it is often advantageous to combine the hub controller core functionality with a sensor function to reduce the overall number of devices in the system. Thus, some room control subsystems could include hub module 202 with an integrated temperature sensor and one or more actuator modules. Separate sensor modules such as the sensor module 204 would not be necessary.

To accomplish these and other functions, the hub module 202 includes a network interface 270, a room control processor 272, a non-volatile memory 274, a signal processing circuit 276, a MEMS sensor suite 278 and a MEMS local RF communication circuit 280.

The network interface 270 is a communication circuit that effectuates communication to one or more components of the building control system that are not a part of the space control subsystem 110. Referring to Fig. 1, the network interface 270 is the device that allows the space control subsystem 110 to communicate with the supervisory computer 102, the fan controller subsystem 106, the chiller controller subsystem 108 and/or the other room controller subsystems.

Referring again to Fig. 2, to allow for wireless communication between controller subsystems of the building control system 100, the network interface 270 is preferably an RF modem configured to communicate using the wireless area network communication scheme. Preferably, the network interface 270 employs a packet-hopping protocol to reduce the overall transmission power required. In packet-hopping, each message may be transmitted through multiple intermediate network interfaces before it reaches its destination. Referring again to Fig. 1, if the space control subsystem 110 sends a message to the fan control subsystem 106, the network interface of the space control subsystem 110 provides the message to the physically closest subsystem. Thus, in the embodiment shown in Fig. 1, the network interface of the space control subsystem 110 provides the message to the network interface of the space control subsystem 112. The network interface of the space control subsystem 112 reads the destination address of the message and determines that the message is not intended to be received at the space control subsystem 112. As a consequence, the network interface of the space control subsystem 112 passes the message along to the network interface of the next closes subsystem, which is the space control subsystem 114. The network interface of the space control subsystem 114 similarly passes the message onto the fan control subsystem 116. The network interface of the fan control subsystem 116, however, recognizes from the destination address in the message that it is the intended recipient. The network interface of the fan control subsystem 116 thus receives the message and processes it.

Referring again to Fig. 2, in order to facilitate the wireless area network operation described above, the network interface 270 is preferably operable to communicate using a short range wireless protocol. The network interface 270 is further operable to, either alone or in conjunction with the control processor 272, interpret messages in wireless communications received from external devices and determine whether the messages should be retransmitted to another external device, or processed internally to the module 202. As discussed above, is a packet hopping protocol is employed, the network interface 270 may receive a message intended for another subsystem. In such a case, the network interface 270 retransmits the message to another device. However, if the network interface 270 includes a temperature set point for the space control subsystem 110 of Fig. 2, then the network interface 270 passes the information to the room control processor 272.

As discussed above, the hub module 202 may optionally include sensor capability. To this end, the MEMS sensor suite 278 may suitably include a plurality of MEMS sensors, for example, a temperature sensor, flow sensor, pressure sensor, and/or gas-specific sensor. As with the sensor modules 204 and 206, the hub module 202 may be programmed to enable the particular desired sensing capability. In this manner, a single hub module design may be manufactured to for use in a variety of HVAC sensing applications, each hub module 202 thereafter being configured to its particular use. (See e.g. Figs. 3 and 4). However, it may be sufficient to provide hub control modules having only temperature sensing capability because rooms that employ an HVAC controller also typically require a temperature sensor. Thus, a temperature sensor on the hub module will nearly always fill a sensing need when the hub module is employed.

The signal processing circuit 276 includes the circuitry that interfaces with the sensor suite 278, converts analog sensor signals to digital signals, and provides the digital signals to the room control processor 272. As discussed above, examples of low power, micro-electronic A/D converters and sensor interface circuitry are shown in the WINS Presentation.

The programmable non-volatile memory 274, which may be embodied as a flash programmable EEPROM, stores configuration information for the hub module 274. By way of example, programmable non-volatile memory 274 preferably includes system identification information, which is used to associate the information generated by the sensor module 274 with its physical and/or logical location in the building control system. The memory 274 further includes set-up configuration information related to the type of sensor being used. The memory 274 may further include calibration information regarding the sensor, and system RF communication parameters employed by the control processor 272, the network interface 270 and/or the local RF communication circuit 280.

The MEMS local RF communication circuit 280 may suitably include a Bluetooth RF modem, or some other type of short range (about 30 - 100 feet) RF communication modem. The MEMS local RF communication circuit 280 is operable to communicate using the same RF communication scheme as the MEMS local RF communication circuits 210, 230 and 250. As with the sensor module 204, the use of a MEMS-based RF communication circuit allows for reduced power consumption, thereby enabling the potential use of a true wireless, battery operated hub module 202. Moreover, it may be possible and preferable to employ many of the same RF elements in both the local RF communication circuit 280 and the network interface 270. Indeed in some cases, the local RF communication circuit 280 and the network interface 270 are substantially the same circuit. In any event, a suitable MEMS-based RF communication circuit is discussed in the WINS Presentation.

The control processor 272 is a processing circuit operable to control the general operation of the hub module 274. In addition, the control processor 272 implements a control transfer function to generate control output values that are provided to the actuator module 208 in the space control subsystem 110. To this end, the control processor 272 obtains sensor information from its own sensor suite 278 and/or from sensor modules 204 and 206. The control processor 272 also receives a set point value, for example, from the supervisory computer 102 via the network interface 270. The control processor 272 then generates the control output value based on the set point value and one or more sensor values. The control processor 272 may suitably implement a proportional-integral-differential (PID) control algorithm to generate the control output values. Suitable control algorithms that generate control output values based on sensor or process values and set point values are known.

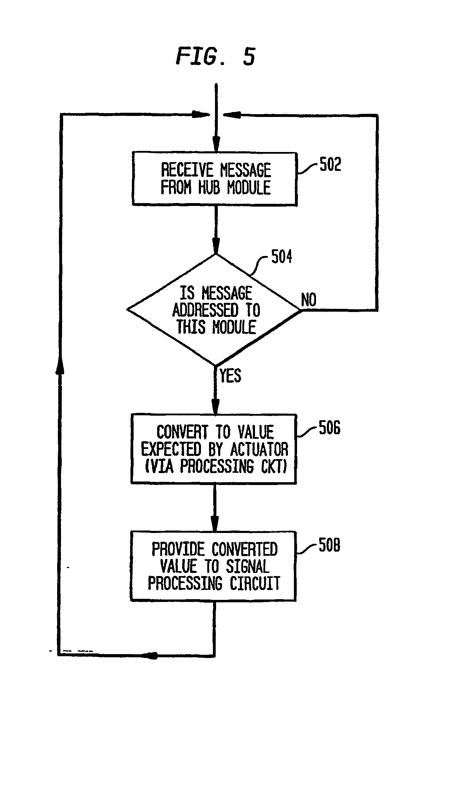

Exemplary sets of operations of the room control system 110 is shown in Figs. 3, 4 and 5. In general, Figs. 3, 4 and 5 illustrate how the hub module 202, the sensor module 204 and actuator 208 operate to attempt to control aspects of the environment of the room. More specifically, Fig. 3 shows an exemplary set of operations of the hub module 202, Fig. 4 shows an exemplary set of operations of the sensor module 204, and Fig. 5 shows an exemplary set of operations of the actuator module 208.

Referring particularly to Fig. 3, the operations shown therein will be described with contemporaneous reference to Fig. 2. The operations of Fig. 3 are performed by the room control processor 272, which generally controls the operation of the hub module 202.

Steps 302, 304. and 306 all represent operations in which the room control processor 272 receives input values from various sources. The order in which those steps are performed is not of critical importance.

In step 302, the processor 272 receives a flow value from the sensor module 206, which in the exemplary embodiment described herein has been configured as a flow sensor module. To receive a flow value from the sensor module 206, the processor 272 causes the local RF communication circuit 280 to be configured to receive a transmitted message from the local RF communication circuit 230 of the sensor module 206. When a message is received, the local RF communication circuit 280 and/or the processor 278 verify the source and intended destination of the message. If the message is legitimately intended for the hub module 202, then the processor 278 parses the sensor value from the message for subsequent use.

In step 304, the processor 272 receives temperature measurement values from the sensor module 204 as well as its internal temperature sensor device 278. In many cases, only a single temperature sensor value is necessary, in which case the hub module 202 need not include the temperature sensor 278, or, alternatively, the sensor module 204 would not be necessary. In the exemplary embodiment described herein, however, it will be assumed that the processor 272 receives temperature values from both the temperature sensor device 278 and the sensor module 204. To receive a temperature value from the sensor module 204, the processor 272 and local RF communication circuit 280 operate in the same manner as that described above in connection with receiving flow sensor values from the sensor module 206. To receive a temperature value from the sensor 278, the processor 272 receives digital sensor information from the signal processing circuit 276.

In step 306, the processor 272 obtains a set point value through the network interface 270. In particular, in the embodiment described herein, the set point temperature for the room in which the control subsystem 110 is disposed is provided from a device external to the control subsystem 110. For example, the supervisory computer 102 of Fig. 1 may provide the temperature set points for all of the space control subsystems 110,112 and 114 in the building control system 100. It will be noted, however, that in alternative embodiments, the set point may be derived from a manually-adjustable mechanism directly connected to the hub module 202.

To receive the set point value from the external device, the network interface 270 monitors transmissions in the WAN on which the various subsystems communicate. If a message including a set point intended for the space control subsystem 110 is received by the network interface 270, then that message will be provided to the processor 272. In such a case, the processor 272 parses out the set point information for subsequent use, such as use in the execution of step 308, discussed below.

In step 308, the processor 272 generates a control output value based on the most recently received set point value and temperature sensor values. To this end, the processor 272 may suitably employ a PID controller algorithm to generate the control output value. In the embodiment described herein, the control output value is representative of a desired change in a vent damper position. For example, if chilled air is provided through the vent, and the sensor temperature value exceeds the set point temperature value, then the control output value identifies that the vent damper must be opened further. Further opening the vent damper allows more chilled air to enter the room, thereby reducing the temperature.

A PID control algorithm that is capable of generating a vent damper position based on a difference between temperature sensor values and a set point temperature value would be known to one of ordinary skill in the art. In general, it will be noted that the use of particular control system elements such as temperature sensors, set point temperatures, and vent dampers are given by way of illustrative example. The use of control systems and subsystems with reduced wiring as generally described herein may be implemented in control systems implementing a variety of sensor devices and actuators or other controlled devices.

Referring again to the specific embodiment described herein, it will be appreciated that during ongoing operation, the processor 272 does not require an update in each of steps 302, 304 and 306 prior to performing step 308. Any update received in any of those steps can justify a recalculation of the control output value. Moreover, the processor 272 may recalculate the control output value on a scheduled basis, without regard as to which input values have changed.

In step 310, the processor 272 causes the generated control output value to be communicated to the actuator module 208. To this end, the processor 272 and the local RF communication circuit 280 cooperate to generate a local RF signal that contains information representative of the control output value. The processor 272 may suitably add a destination address representative of the actuator module 208 to enable the actuator module 208 to identify the message.

It is noted that in the exemplary embodiment described herein, the flow sensor value received from the flow sensor module 206 is not used in the PID control calculation performed by the processor 272. That value is obtained so that it may be used by other subsystems or by the supervisory computer 102. Indeed, multiple sensor values are typically communicated to external subsystems.

To this end, in step 312, the processor 272 causes the network interface 270 to transmit received sensor values to devices external to the room control subsystem 110. For example, the processor 272 may cause temperature and flow sensor values to be transmitted to the supervisory computer 102. The supervisory computer 102 may then use the information to monitor the operation of the building control system. Moreover, temperature and/or flow sensor values from various space control subsystems may be employed by the fan control subsystem 108 to adjust operation of one or more ventilation fans, or by the chiller control subsystem 106 to adjust operation of the chiller plant. Accordingly, the processor 272 must from time to time cause sensor values generated within the space control subsystem 110 to be communicated to external devices through the network interface 270.

The room control processor 272 repeats steps 302-312 on a continuous basis. As discussed above, the steps 302-312 need not be performed in any particular order. New sensor and/or set point values may be received periodically either on a schedule, or in response to requests generated by the processor 272.

With regard to the sensor values, Fig. 4 shows an exemplary set of operations performed by the sensor module 204 in generating and transmitting temperature sensor values to the hub module 202 in accordance with step 302 of Fig. 3. The sensor module 206 may suitably perform a similar set of operations to generate and transmit flow sensor values to the hub module 202 in accordance with step 304 of Fig. 3.

Referring now to Fig. 4, the operations shown therein are performed by the microcontroller 212 of the sensor module 204. In step 402, the microcontroller 212 determines whether it is time to transmit an updated temperature value to the hub module 202. The determination of when to transmit temperature values may be driven by a clock internal to the sensor module 204, or in response to a request or query received from the hub module 202, or both. In either event, if it is not time to transmit an update, the microcontroller 212 repeats step 402.

If, however, it is determined that an update should be transmitted, then the microcontroller 212 proceeds to step 404. In step 404, the microcontroller 212 obtains a digital value representative of a measured temperature from the signal processing circuit 216. To this end, the microcontroller 212. preferably "wakes up" from a power saving mode. The microcontroller 212 preferably also causes bias power to be connected to power consuming circuits in the signal processing circuit 216, such as the A/D converter. In this manner, power may be conserved by only activating power consuming circuits when a temperature sensor value is specifically required. Otherwise, the power consuming devices remain deactivated. Thus, for example, if a temperature value need only be updated every fifteen seconds, many of the power consuming circuits would only be energized once every fifteen seconds. However, it is noted that if the power source 220 is derived from AC building power, the need to reduce power consumption is reduced, and the microcontroller 212 and the signal processing circuit 216 may receive and process digital temperature sensing values on an ongoing basis.

In any event, after step 404, the microcontroller 212 proceeds to step 406. In step 406, the microcontroller 212 converts the sensed digital temperature value into the format expected by the room control processor 272 of the hub module 202. The microcontroller 212 further prepares the message for transmission by the local RF communication circuit 210. Once the message including the sensor temperature value is prepared, the microcontroller 212 in step 408 causes the local RF communication circuit 210 to transmit the message. The message is thereafter received by the hub module 202 (see step 304 of Fig. 3). Thereafter, the microcontroller 212 may return to step 402 to determine the next time an update is required.

Fig. 5 shows an exemplary set of operations that may be performed by the microcontroller 252 of the *actuator module* 208. As discussed above, one purpose of the space control subsystem 110 is to control the physical operation of a device to help regulate a process variable, in this case, the room temperature. The actuator module 208 thus operates to carry out the actions determined to be necessary in accordance with the control algorithm implemented by the room process controller 272.

First, in step 502, a message which may include the control output value is received from the hub module 202. To this end, the RF communication circuit 250 receives the message and provides the message to the microcontroller 252. Thereafter, in step 504, the microcontroller 252 determines whether the received message is intended for receipt by the actuator module 208. If not, then the microcontroller 252 returns to step 502 to await another incoming message.

If, however, the microcontroller 252 determines in step 504 that the received message *is* intended for the actuator module 208, then the microcontroller 252 proceeds to step 506. In step 506, the microcontroller 252 parses the message to obtain the actuator control output value, and converts that value into a value that will cause the actuator to perform the requested adjustment. For example, if the received control output value identifies that the ventilator damper should be opened another 10%, then the microcontroller 252 would generate a digital output value that, after being converted to analog in the signal processing circuit 256, will cause the actuator 258 to open the ventilator damper another 10%.

In step 508, the microcontroller 252 actually provides the digital output value to the signal processing circuit 256. The signal processing circuit 256 then converts the value to the corresponding analog voltage expected by the actuator device 258. Thereafter, the microcontroller 252 returns to step 502 to await the next message received from the hub module 202.

The above described space control subsystem 110 is merely an exemplary illustration of the principles of the invention. The principles of the invention may readily be applied to control subsystems having more or less sensors or actuators, as well as other elements.

The relatively low power requirements enabled by the use of MEMS devices and local RF communications in the sensor modules and even the hub module allow for implementation of the modules in battery operated format. Thus, a mostly wireless building control system may be developed. However, as discussed above, many advantages of the present invention may be obtained in systems that use other forms of power.

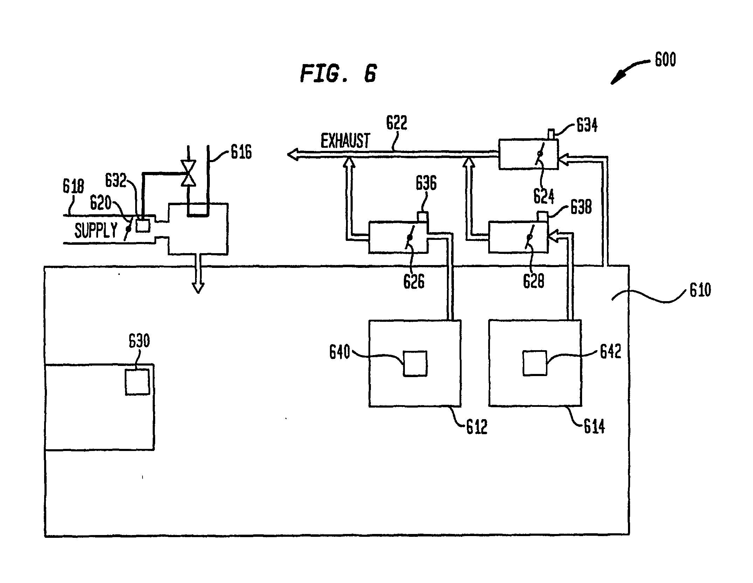

Fig. 6 shows an exemplary embodiment of the space control subsystem 114 of the building control system 100 of Fig. 1. The space control subsystem 114 of Fig. 6 is used in a space or room 610 that includes two fume hoods 612 and 614. A fume hood, as is known in the art, is a fume collection device disposed over an enclosed surface. The fume hoods 612 and 614 allow for experiments or processes that involve noxious gasses fumes by conducting those gasses away from the experimental area.

The room 610 is coupled in an air communication relationship with an air flow supply duct 618 in which are disposed a supply damper 620 and a radiator or heating coil device 616. The room 610 is also coupled to communicate air to an exhaust duct 622 through a main exhaust damper 624. Fume hood dampers 626 and 628 communicate air/gas within the fume hoods 612 and 614, respectively, to the exhaust duct 622.

The space control subsystem 114 is designed to both regulate the temperature within the room 610 as well as ensure that the fume hoods 612 and 614 achieve their purpose in conducting away gasses. For ordinary temperature regulation, the space control subsystem 114 controls the operation of the supply damper 620 and the heating coil 616 to control the supply of heated or cooled air into the room 610. The space control subsystem 114 control the main exhaust damper 624 in a coordinated fashion with the supply damper 620 to ensure sufficient fresh air and proper atmospheric pressure is maintained within the room 610. For conducting away noxious gasses, the space control subsystem 114 controls the operation of the fume hood dampers 626 and 628 to conduct gasses away when their presence is detected. The supply damper 620 and/or the main exhaust damper 624 is also controlled in a coordinated manner to ensure that the required air flow to conduct gasses away is available through the appropriate fume hood damper 626 or 628.

To this end, the space control subsystem 114 includes a control module 630, a supply flow module 632, a main exhaust module 634, a first fume hood exhaust module 636, a second fume hood exhaust module 638, a first fume hood sensor module 640, and a second fume hood sensor module 642.

The control module 620 generally operates to effectuate communication between the space control subsystem 114 and the other subsystems of the building control system 100 (see Fig. 1). In the embodiment described herein, the control module 620 further includes a temperature sensor. The supply flow module 632 controls the supply damper 620 to regulate the supply of air flow into the space 610, and further controls the supply of heat (or cool) water to the heating coil element 616 disposed in the path of the air flow supply. The main exhaust module 634 controls the main exhaust damper 624 to regulate the flow of air out of the space 610, such that in general the atmospheric pressure within the room is controlled by the cooperative efforts of the supply flow module 622 and the main exhaust module 624.

The first fume hood exhaust module 636 controls the damper 626 to control the exhaust or venting of fumes or gas from within or in the vicinity of the fume hood 612. The second fume hood exhaust module 638 controls the damper 628 to control the exhaust or venting of fumes or gas from within or in the vicinity of the fume hood 614. The first fume hood sensor module 640 is operable to obtain measurements indicative of the concentration of a gas within the fume hood 612, while the second fume hood sensor module 642 is operable to obtain measurements indicative of the concentration of a gas with the fume hood 614.

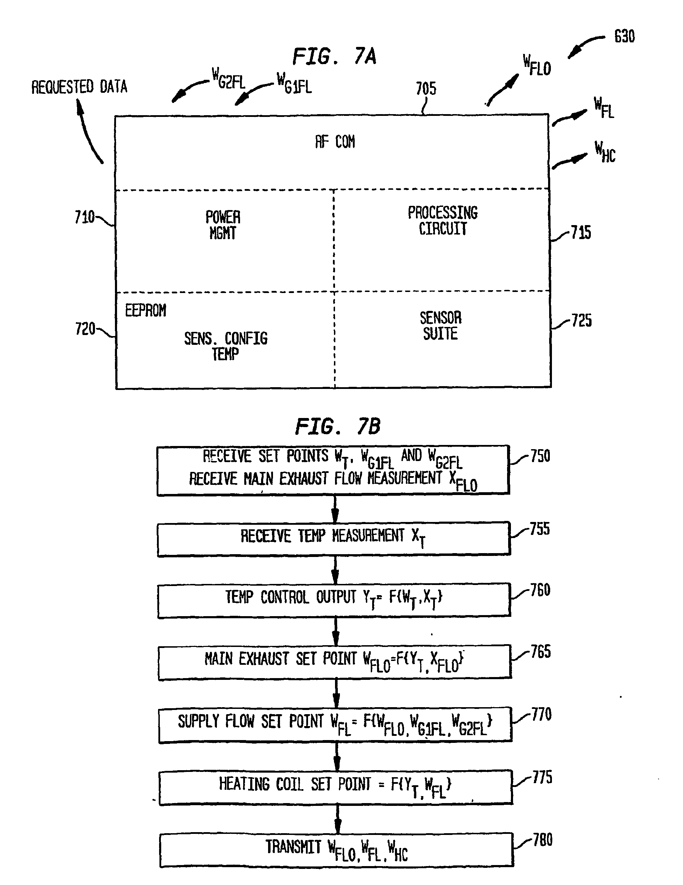

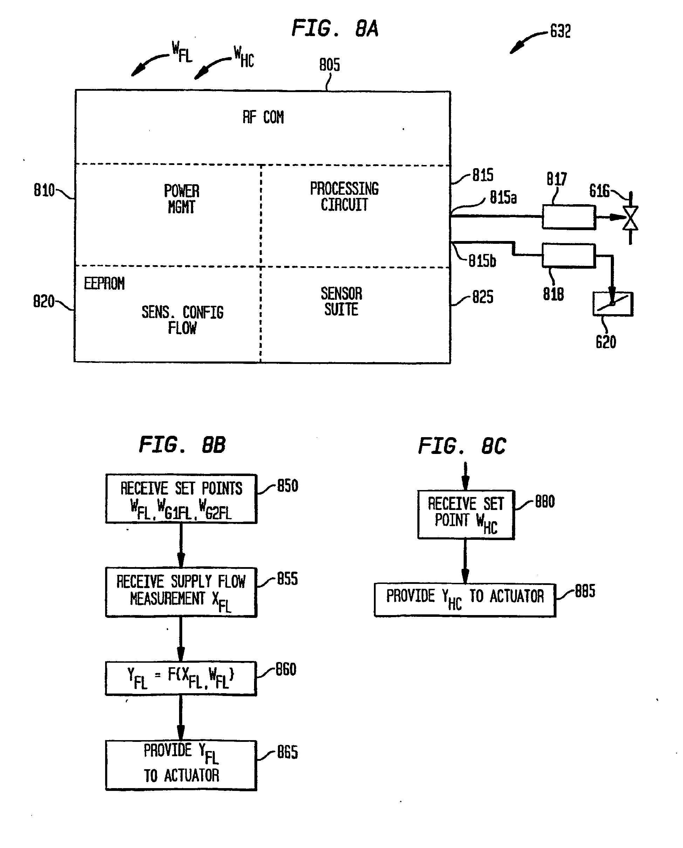

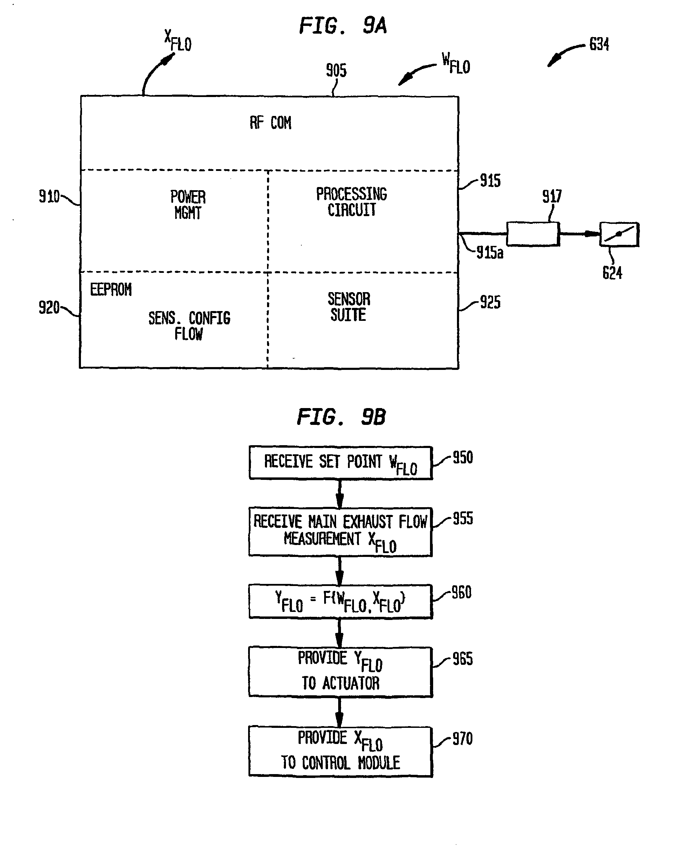

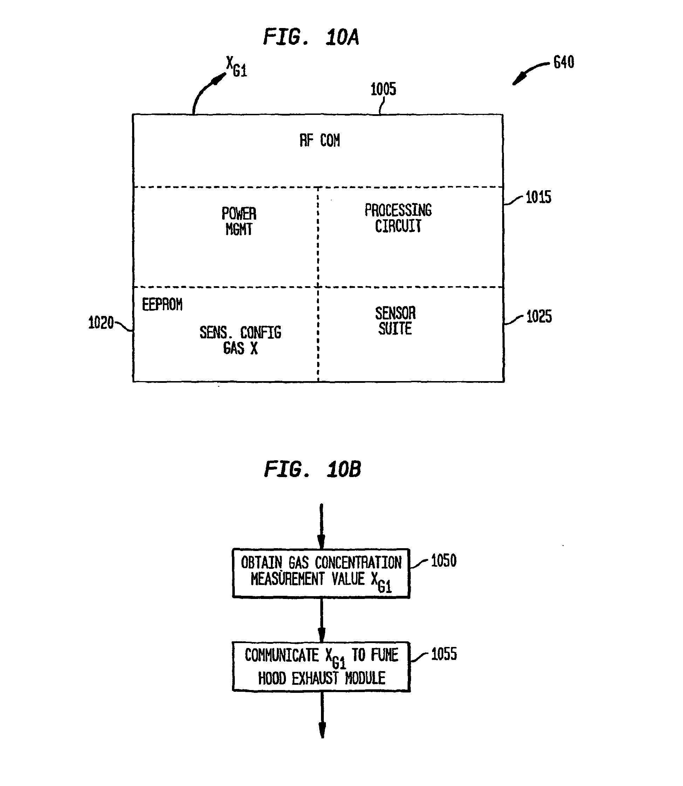

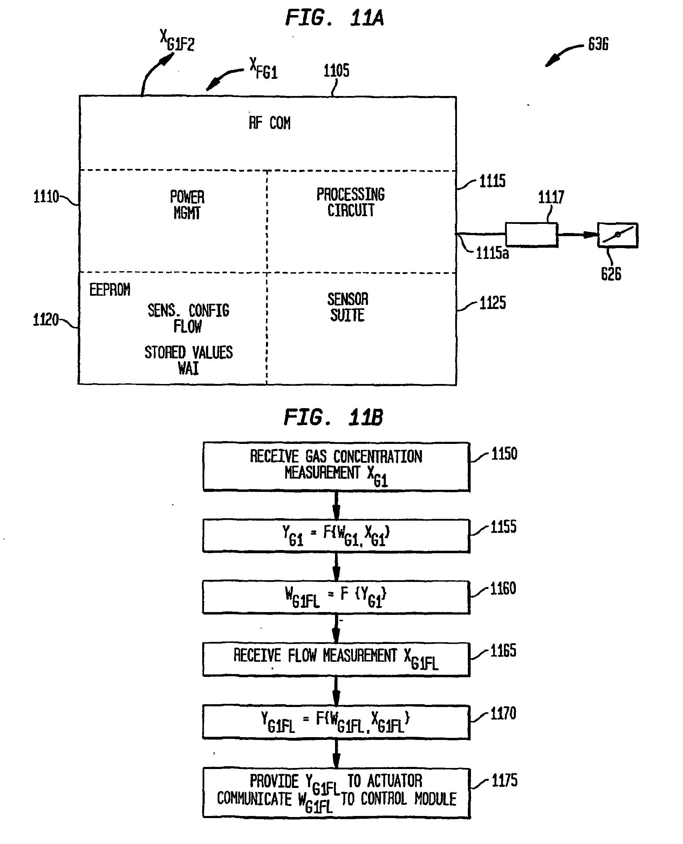

Figs. 7a-b, 8a-c, 9a-b, 10a-b and 11a-b describe the structure and operation of the various modules 630 through 642 of the space control subsystem 114 in order to carry out the above described control operations. In particular, Figs. 7a and 7b describe the structure and operation of the control module 630, Figs. 8a, 8b and 8c describe the structure and operation of the supply module 632, Figs. 9a and 9b describe the structure and operation of the main exhaust module 634, Figs. 10a and 10b describe the structure and operation of the first fume hood sensor module 640 (which is also applicable to the second fume hood sensor module 642), and Figs. 11a and 11b describe the structure and operation of the first fume hood exhaust module 636 (which is also applicable to the second fume hood exhaust module 638).

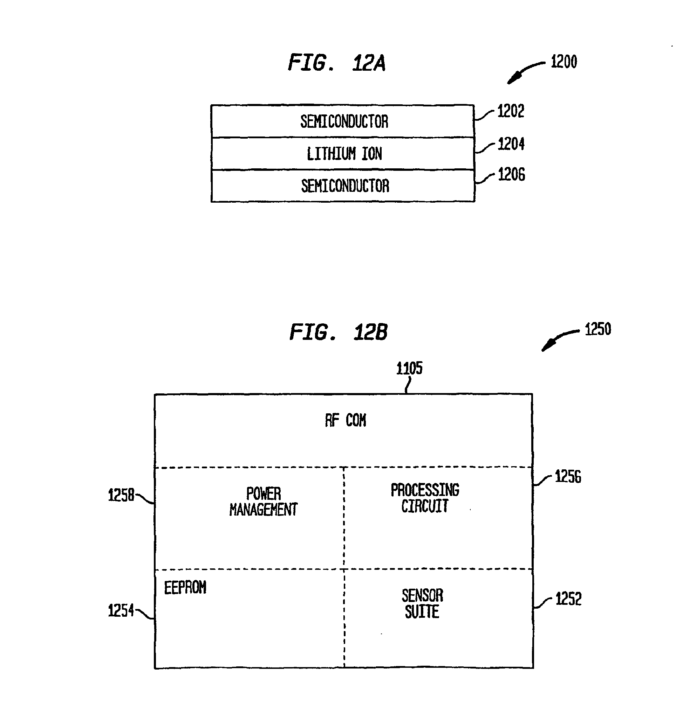

Preferably, all of the modules 630, 632, 634, 636, 638, 640 and 642 are constructed of a uniform basic module design, and then individually configured to carry out the particular operations described below. To this end, Figs. 12a and 12b show an exemplary embodiment of a flexible, MEMS-based module design that is particularly useful in building control, automation, comfort, security and/or safety systems.

Referring to Figs. 12a and 12b, the module 1200 is implemented as a single, self powered, standalone device in which most of the active components are integrated onto one or two semiconductor substrates:

As shown in Fig. 12a, the module 1200 in the embodiment described herein includes a top semiconductor layer 1202, a lithium ion battery layer 1204 and a bottom semiconductor layer 1206. The various functions of the module 1200, discussed below in connection with Fig. 12b, are incorporated into the top and bottom semiconductor layers 1202 and 1206. The lithium ion battery layer 1204 provides a source of electrical power to the top and bottom semiconductor layers 1202 and 1206. The lithium ion battery layer 1204 is preferably disposed between the top and bottom semiconductor layers 1202 and 1206 to provide an advantageous, space-efficient layout. Various interconnects may be provided between the two semiconductor layers 1202 and 1206 around the lithium ion battery layer 1204 as need. In the alternative, one of the two layers may be dedicated completely to a light-powered recharging circuit for the lithium ion battery layer 1204. In another alternative, all of the elements of the module 1200 may be implemented onto a single semiconductor substrate such as the layer 1202.

Fig. 12b shows a block diagram representation of the module circuits 1250 that are implemented into the semiconductor layers 1202 and 1206 of the module 1200. The module circuit 1250 include a sensor suite 1252, an EEPROM 1254, a processing circuit 1256, a power management circuit 1258 and an RF communication circuit 1260.

The RF communication circuit 1260 is a MEMS based communication circuit such as that described above in connection with Fig. 2. The RF communication circuit 1260 is preferably configured to communicate using at least one local RF communication format, such as Bluetooth.

The power management circuit 1258 that preferably operates to recharge the lithium ion battery layer 1204 of Fig. 6, and may include semiconductor devices that convert light or RF energy into electrical energy that may be used to trickle charge the lithium ion battery.

The sensor suite 1252 is collection of MEMS sensors incorporated into a single substrate. The incorporation of multiple MEMS sensor technologies is known. For example, Hydrometrics offers for sale a MEMS sensor device that includes both temperature and humidity sensing functions. MEMS based light, gas content, temperature, flow, smoke and other sensing devices are known. Such devices are in the embodiment described herein implemented onto a single substrate 1202 or 1206, or pair of substrates 1202 and 1206.

The processing circuit 1256 incorporates a microprocessor or microcontroller, as well as microelectronics A/D circuits for connecting to the MEMS sensor devices of the sensor suite 1252. As such, the processing circuit 1256 performs the operations described above in connection with the signal processing circuit 216 and controller 212 of the sensor module 204 of Fig. 2.

The EEPROM 1254 (which may be another type of non-volatile, chip-based memory such as ferro-electric or ferro-magnetic RAM) is a non-volatile memory that stores the configuration information for the module 1200. For example, the EEPROM 1254 may store ID information used to identify the module 1200 to the system in which it is connected. The EEPROM 1254 also stores information related to the function in which the module 1200 will be used. For example, the EEPROM 1254 may store information identifying that the module 1200 should enable its temperature sensing function as opposed to any of its other possible sensing functions.

As discussed above in connection with Fig. 2, the configuration information in the EEPROM 1254 may simply identify the intended functionality of the module 1200, which would then cause the processing circuit 1256 to execute portions of program code stored in ROM (not shown) to carry out that identified functionality. To this end, the EEPROM 1254 may be replaced by a set of DIP switches that may be manually manipulated to set the configuration of the module 1200. In either case, such embodiments would require that most of the program code for a variety of different sensor functions be stored in ROM, only a portion of which would be used once the configuration information is received.

However, in one embodiment of the invention, most or all of the code unique to the selected function of the module is downloaded into the EEPROM 1254 during configuration of the device. Thus, if the module 1200 is to operate as a temperature sensor module, then all appropriate code for a temperature sensor module is downloaded to the EEPROM 1254, as is identification information and calibration information. This method provide maximum flexibility because a single module 1200 may be programmed to do many custom tailored tasks, in addition to performing sensor functions.

Regardless of whether the EEPROM 1254 is configured via large amounts of programming code, or through flags and parameters that are used to select pre-existing code within the module 1200, the configuration information is downloaded to the EEPROM 1254 from an external device, for example, a portable programming device. In particular, a portable programming device provides programming instructions via RF signals to the RF communication circuit 1260. The processing circuit 1256 obtains the programming instructions from the RF communication circuit 1260 and stores the instructions into the EEPROM 1254. It will be appreciated that other techniques for providing configuration information to the EEPROM 1254 may be used.

Thus, the above described module 1200 may readily be configured as any one of a large plurality of sensor types or even other types of building automation system components. As a consequence, large amounts of the devices may be fabricated, thereby reducing the per-unit tooling and design costs associated with ordinary building automation sensors. In addition, the highly integrated nature of the devices reduces shipping and storage costs, as well as reduces power consumption. It will be noted that the design of the module 1200 may be used as the sensor modules 204, 206 in the exemplary space control subsystem 200 of Fig. 2, and may also be used as the hub module 202. In such a case, the network interface 270 of the hub module 202 may be configured to operate via the RF communication circuit 1260 of the module 1200 of Figs. 12a and 12b.

Returning now to the discussion of the subsystem 114 of Fig. 6, it will be assumed that in the embodiment described herein that the modules 630, 632, 634, 636, 638, 640 and 642 all employ the design and construction of the module 1200 of Figs. 12a and 12b. However, it will be appreciated that other assemblies of those circuits may be employed and achieve at least some of the benefits of the invention.

The individual modules 630, 632, 634, 636, 638, 640 and 642 of Fig. 6 are now described in further detail.

Referring to the control module 630, Fig. 7a shows an exemplary block diagram of the control module 630, while Fig. 7b shows an exemplary flow diagram of the operations performed by the control processor of the control module 630. In the exemplary embodiment describe herein, the control module 630 cooperates with the supply module 632 and main exhaust module 634 to control the temperature in the room 610. As discussed above, the control module 630 also facilitates communication of information, if necessary, between any of the modules 630-642 and elements of other subsystems of the building control system 100 (see Fig. 1).

As discussed above, the control module 630 has a general construction substantially similar to the module 1200 of Figs. 12a and 12b. To this end, the control module 630 includes an RF communication circuit 705, a power management circuit 710, a processing circuit 715, an EEPROM 720, and a sensor suite 725. Each of the elements of the control module operates generally as described above in connection with Figs. 12a and 12b.

The control module 630 includes a temperature sensing functionality. As a consequence, the EEPROM 720 includes configuration information identifying that processing circuit 715 should obtain and process temperature measurement information from the MEMS sensor suit 725. In the exemplary embodiment described herein, the EEPROM 720 further includes sufficient program instructions or code to carry out the operations illustrated in Fig. 7b and described below.

The RF communication circuit 705 is preferably configured to communicate with the other elements of the subsystem 114 as well as in the local area network between subsystems. To this end, the RF communication circuit 705 may be able to communicate using the two different communication schemes described above in connection with Figs. 1 and 2. In particular, one scheme would be used for communications within the subsystem 114 and the other scheme would be used to communicate to other subsystems and devices external to the subsystem 114. Alternatively, the RF communication circuit 705 may instead communicate using only a single RF communication scheme. External communications would be carried out through a separate network interface device, not shown, that is itself capable of communicating using the two different communication schemes.

The operation of the control module 630 is described with reference to Fig. 7b, which shows an overview of the functions of the processing circuit 715. With reference to Fig. 7b, in step 750, the processing circuit 715 receives from time to time a room temperature set point value W_{T}. To this end, the RF communication circuit 705 receives the information within communication signals from one or more devices external to the subsystem 114 such as, for example, the supervisory computer 102 of Fig. 1. The RF communication circuit 705 then provides the information to the processing circuit 715. Alternatively, all or part of the temperature set point may be provided via a manual control device disposed within the room 610.

Also in step 750 the processing circuit 715 receives the set points W_{GJFL} and W_{G2FL} from, respectively the fume hood exhaust modules 636 and 638. The processing circuit 715 also receives the measured exhaust flow X_{FLO} from the main exhaust module 634. The processing circuit 715 receives such information from transmitted RF signals from the modules 634, 636 and 638 via the RF communication circuit 705.

Referring to Fig. 6, the set points W_{G1FL} and W_{G2FL} represent the exhaust air flow through the exhaust dampers 626 and 628 from the fume hoods 612 and 614, respectively. As discussed below in connection with step 770, the control module 630 uses the values W_{G1FL} and W_{G2FL} to adjust the supply flow to accommodate any additional outflow through the dampers 626 and 628. In particular, whenever it becomes necessary to vent fumes through the fume hood via either of the dampers 626 or 628, the supply flow at the supply damper 620 is increased to provide additional air pressure to force air flow through the dampers 626 and/or 628. However, it will be appreciated that instead of increasing the supply flow when it becomes necessary to vent fumes through the fume hood(s), the supply flow may remain constant and the main exhaust damper 624 may be further closed or restricted to force exhaust air flow through the fume hood exhaust dampers 626 and/or 628. Alternatively, a combination of partially closing off the main exhaust damper 624 and further opening the supply damper 620 may be used. However, in the exemplary embodiment described herein, the supply damper 620 is adjusted to compensate for additional (or decreased) flow cause by opening (or closing) the fume hood exhaust dampers 626 and/or 628. For this reason, the processing circuit 715 receives W_{G1FL} and W_{G2FL} in step 750, as well as W_{T}.

In step 755, the processing circuit 715 also receives from time to time a room temperature measurement value X_{T}. To this end, the processing circuit 715 obtains an analog temperature measurement value from the temperature sensor element within the MEMS sensor suite 725 and converts the analog temperature measurement value to a representative digital value thereof X_{T}.

In step 760, the processing circuit 715 generates a temperature control output value Y_{T}. The value Y_{T} actually represents an interim value in the system indicative of how the system must change to achieve the temperature set point W_{T}. Thus, Y_{T} is a function of W_{T} and X_{T}. By way of a simple example, Y_{T} may suitably be set to the error signal W_{T} - X_{T}.

Thereafter in step 765, the processing circuit 715 calculates the main exhaust set point W_{FLO} based on the current exhaust X_{FLO} and the temperature control output Y_{T}. The function that determines W_{FLO} carries out the operations set forth below.

In general, if the temperature is too high within the room 610 *(i.e.* Y_{T} is a negative number), then additional cool air should be supplied to the room 610. It is assumed that the supply duct 618 moves cooling air into the room 610 when the
- heating coil 616 is not actuated. Thus; if Y_{T} is a negative number, then the additional flow from the supply duct 618 is required. Instead of directly increasing the supply flow, however, the main exhaust flow set point W_{FLO} is increased in step 765. As will be discussed below in connection with step 770, the supply flow set point, W_{FL}, will also be adjusted accordingly. The resulting increase in the supply flow and exhaust flow moves more cool air into the room, thereby reducing the temperature within the room.

If, instead, the temperature is too low within the room 610, *(i.e.* Y_{T} is a positive number), then the flow of cool air from the supply duct 618 should be decreased. To this end, the main exhaust flow set point W_{FLO} is adjusted downward, if possible. The reduction in the exhaust flow and corresponding reduction in supply flow (see step 770) *reduces* the flow of cool air into the room 610 and should result in an increase in the temperature. If, the main exhaust flow is already minimized, in other words, the main exhaust damper 624 is substantially closed, then the main exhaust flow set point W_{FLO} cannot be adjusted further downward. The determination as to whether the main exhaust damper 624 is substantially closed is based on the exhaust flow X_{FLO} value.

The above described functionality of step 765 may readily be carried out by any number of suitable function definitions that determine W_{FLO} based on Y_{T} and X_{FLO}.

In step 770, the processing circuit 715 calculates the supply flow set point W_{FL} based on the exhaust flow set point W_{FLO} and the two fume hood exhaust flow set points, W_{G1FL} and W_{G2FL}. To this end, it will be appreciated that in the exemplary embodiment shown in Fig. 6, the total air flowing out of the room 610 flows through the main exhaust damper 624, the first fume hood exhaust damper 626 and the second fume hood exhaust damper 628. Accordingly, to avoid unduly pressurizing and/or depressurizing the room, the supply flow set point W_{FL} is set to accommodate to the three exhaust flow set points. In a simple example, W_{FL} = W_{FLO} + W_{G1FL} + W_{G2FL}.

It will be appreciated that as the exhaust flow W_{FLO} is increased or decreased in step 765, the supply flow exhaust point W_{FL} should increase or decrease accordingly.

Likewise, the supply flow increases or decreases responsive to the change of either of the fume hood exhausts. For example, if the fume hood 612 must be vented, then the first fume hood exhaust flow set point W_{G1FL} is increased (see Figs. 10 and 11) and the supply flow set point W_{FL} is increased accordingly. As a consequence, the subsystem 114 automatically increases air flow into the room 610 to supply the needed additional pressure to vent fumes through the fume hood exhaust dampers 626 and/or 628.

Thus, in step 770, the supply flow set point W_{FL} is set responsive to based on the exhaust flow set points W_{FLO}, W_{G1FL}, and W_{G2FL}

In step 775, the processing circuit 715 determines the heating coil set point W_{HC} based on the temperature control value Y_{T} and the supply flow set point W_{FL.} In general, if the temperature in the room remains low *(i.e.* Y_{T} is positive) for a long time, it is indicative that the attempts to raise the temperature through control of the air flow (in steps 765 and 770) were not successful. In such a case, the heating coil 616 should be turned on. To this end, the heating coil set point W_{HC} is determined based on the value of Y_{T} over time. In addition, the *amount* of heating provided by the convection air flow over the heating coil 616 depends in part on the air flow *rate* past the heating coil 616. Accordingly, the heating coil set point W_{HC} is also preferably determined as a function of the supply flow set point W_{FL}.

Thus, the above steps 765 and 770 regulate the supply flow of cooler air into the room 610 to control the temperature. However, if such regulation cannot adequately raise the temperature of the room 610, then the heating coil 616 is used to help regulate temperature in step 775. For example, the supply flow of cooler air in some cases cannot be reduced (to raise room temperature) because of the need for air flow to vent gasses out of the fume hoods 612 and/or 614. Thus, even though a low temperature may indicate that the supply flow should be reduced, the supply flow cannot be reduced without jeopardizing fume hood operation. In such cases, the heating coil 616 is actuated and the supply flow actually provides warm air that raises the room temperature.

It will be appreciated that other methods may be used to regulate temperature within a space or room while adjusting the supply flow and/or exhaust flow to compensate for the need to vent air through the fume hoods 612 and/or 614.

In any event, in step 780, the processing circuit 715 causes the RF communication circuit 705 to communicate the room flow set point W_{FL} and the heating coil set point W_{HC} to the supply flow module 632, and to communicate the exhaust flow set point W_{FLO} to the main exhaust module 634. Operation of the supply flow module 632 is discussed below in connection with Figs. 8a, 8b and 8c. Operation of the main exhaust module 634 is discussed below in connection with Figs. 9a and 9b.

The processing circuit 715 thereafter periodically receives updates of X_{FLO}, W_{G1FL}, W_{G2FL}, and/or W_{T} via the RF communication circuit 705, and updates of the measured temperature X_{T} from the sensor suite 725. While these updates are typically interrupt-based, such that reception of one of the values causes recalculation of one or more of the values W_{FLO}, W_{FL} or W_{HC}, another suitable update and recalculation scheme would involve periodically requesting updates to any or all of W_{G1FL}, W_{G2FL}, W_{T} and/or X_{T}. In either event, upon receiving one or more updates, the processing circuit 715 preferably repeats of steps 760, 765, 770, 775 and 780.

It will thus be noted that the steps 750 through 780 need not be executed in the order illustrated in Fig. 7b, nor must both steps 750 and 755 be executed prior to each subsequent execution of steps 760 through 780. However, over the course of operation, steps 750 through 780 will be executed repeatedly.

The above steps illustrate how the control module 630 may determine the set point for the supply flow damper 620, the exhaust flow damper 624 and the heater coil 616 in order to control the room temperature. It will be appreciated that the control module 730 may readily be adapted to other methods to control the temperature. The control module 630 further adjusts the supply flow as necessary to compensate for the need for additional air flow to vent fumes out of this exhaust dampers 626 and/or 628.

It is noted, however, that the control module 730 does not directly cause actuators of the heating coil or air flow equipment to act. Instead, the control module 730 merely obtains the set points, W_{FLO}, W_{FL} and W_{HC}, for such equipment. The actuators for the supply damper 620 and heater coil 616 are controlled by the supply flow module 632. The actuator for the main exhaust damper 624 is controlled by the main exhaust module 634.

Referring now specifically to Fig. 8a, the supply flow module 632 has a general construction substantially similar to the module 550 of Figs. 12a and 12b. To this end, the supply flow module 632 includes an RF communication circuit 805, a power management circuit 810, an processing circuit 815, an EEPROM 820, and a sensor suite 825. Each of the elements of the control module operates generally as described above in connection with Figs. 12a and 12b.

The control module 830 includes a flow sensing functionality, and is further configured to generate actuator output signals. The actuator output signals may suitably be provided as analog output pins 815a, 815b on the processing circuit 815. The actuator output signals are analog outputs that control the operation of actuators for the heating coil 616 and the damper 620. To this end, the analog output pins 815a and 815b are connected to external actuators 817 and 818.

To enable the flow sensing functionality, the EEPROM 820 includes configuration information identifying that the processing circuit 815 should obtain an air flow measurement information from the MEMS sensor suit 825. In the exemplary embodiment described herein, the EEPROM 820 further includes sufficient program instructions or code to carry out the operations illustrated in Figs. 8b and 8c and described below.

The RF communication circuit 805 is preferably configured to communicate with the other elements of the subsystem 114. As discussed above, the RF communication circuit 805 may suitably be configured to use Bluetooth or another local RF communication protocol.

The operation of the supply flow module 632 is described with reference to Figs. 8b and 8c, which show an overview of two separate functions of the processing circuit 815. Fig. 8b shows the function related to regulation of the supply air flow in the room 610 while Fig. 8c shows the function related to control of the heater coil 616.

With reference to Fig. 8b, in step 850, the processing circuit 815 receives from time to time (via the RF communication circuit 805) the set points W_{FL} and W_{HC} from the control module 630. The use of the heating coil set point W_{HC} is discussed further below in connection with step 880 of Fig. 8c.

In step 855, the processing circuit 815 also receives a supply air flow measurement value X_{FL}. To this end, the processing circuit 815 obtains an analog flow measurement value from the flow sensor element within the MEMS sensor suite 825 and converts the analog flow measurement value to a digital value representative thereof, X_{FL}.

In step 860, the processing circuit 815 calculates a supply flow damper control output Y_{FL} based on the measured flow X_{FL} and the set point value W_{FL}. To this end, the processing circuit 815 may use an ordinary PID algorithm.

In step 865, the processing circuitI 815 provides an actuator output signal corresponding to Y_{FL} to its output 815a, which in turn provides to the actuator 817 that causes mechanical adjustment of the supply flow damper 620.

As with the processing circuit 715 of Fig. 7a, the processing circuit 815 thereafter periodically receives updates of its inputs and recalculates the output value of step 860. Steps 850, 855, 860 and 865 need not be executed in the order illustrated in Fig. 8b.

Fig. 8c shows a flow diagram of the steps of the processing circuit 815 in controlling the actuator 818 of the heater coil 616. In step 880, the processing circuit 815 receives the heating coil set point W_{HC} through the RF communication circuit 805. The processing circuit 815 thereafter in step 885 sets the actuator control output Y_{HC} to value that is the functional equivalent of W_{HC} and provides Y_{HC} to the output 815b. The heating coil actuator control output Y_{HC} then propagates to the actuator 818. The actuator 818 thereafter affects the operation of the heating coil 616 in a manner responsive to the control output Y_{HC} in a manner that would be known to those of ordinary skill in the art.

The processing circuit 815 may thereafter receive periodic updates, via request or otherwise, and then repeat steps 880 and 885. Steps 880 and 885 may suitably executed independently of steps of the steps of Fig. 8b.

The above operations of the processing circuit 815 cause the supply flow module 632 to control both the heating coil 616 and the supply flow damper 620 to regulate the temperature and fresh air supply into the room 610. As discussed above, the processing circuit 815 uses local RF communications to obtain the necessary set points and other data to carry out the operations. In addition, the processing circuit 815 communicates exhaust flow information to the main exhaust module 624.

As referenced further above, Figs. 9a and 9b show the structure and operation of the main exhaust module 634. The main exhaust control module 634 effectively controls the main exhaust damper 624 to help regulate the removal of "spent" air that is being replace with "fresh" air through the supply conduit 618. As is known in the art, fresh air is preferably supplied to the room 610 even in the absence of noxious fumes or gas, particularly to provide cooling air to maintain a steady temperature into the room.

Referring now specifically to Fig. 9a, the main exhaust module 634 has a general construction substantially similar to the module 120 of Figs. 12a and 12b. To this end, the main exhaust module 634 includes an RF communication circuit 905, a power management circuit 910, an processing circuit 915, an EEPROM 920, and a sensor suite 925. Each of the elements of the main exhaust module 634 operates generally as described above in connection with Figs. 12a and 12b.

The main exhaust module 634 includes a flow sensing functionality, and is further configured to generate an actuator output signal. The actuator output signal may suitably be provided as analog output pin 915a on the processing circuit 915. The actuator output signal is an analog output that controls the operation of actuator for the damper 624. To this end, the analog output pin 815a is connected to an external actuator 917, which in turn controls the position of the damper 624.

To enable the flow sensing functionality, the EEPROM 920 includes configuration information identifying that the processing circuit 915 should obtain an air flow measurement information from the MEMS sensor suite 925. In the exemplary embodiment described herein, the EEPROM 920 further includes sufficient program instructions or code to carry out the operations illustrated in Fig. 9b and described below.

The RF communication circuit 905 is preferably configured to communicate with the other elements of the subsystem 114. As discussed above, the RF communication circuit 905 may suitably be configured to use Bluetooth or another local RF communication protocol.

The operation of the main exhaust control module 634 is described with reference to Fig. 9b, which shows an overview of the functions of the processing circuit 915. As shown in Fig. 9b, in step 950, the processing circuit 915 receives from time to time (via the RF communication circuit 905) the main exhaust set point W_{FLO}, which is provided by the control module 630, as discussed above.

In step 955, the processing circuit 915 receives a main exhaust flow measurement X_{FLO}. To this end, the processing circuit 915 obtains an analog flow measurement value from the flow sensor element within the MEMS sensor suite 925 and converts the analog flow measurement value to a digital value representative thereof X_{FLO}.

In step 960, the processing circuit 915 calculates a main exhaust damper control output Y_{FLO} based on the measured flow X_{FLO} and the set point value W_{FLO}. To this end, the processing circuit 915 may use an ordinary PID algorithm.

In step 965, the processing circuit 915 provides an actuator output signal corresponding to Y_{FLO} to its output 915a, which in turn provides the actuator output signal to the actuator 917. The actuator 917 causes mechanical adjustment of the main exhaust damper 624 responsive to the actuator output signal.

In step 970, the processing circuit 915 causes the RF communication circuit 970 to communicate the measured flow value X_{FLO} to the control module 630.

The processing circuit 915 thereafter periodically receives updates of its inputs and recalculates the actuator output signal. In other words, steps 950-970 are periodically repeated.

The above operations of the processing circuit 915 operate to control the main exhaust of "spent" air to the room based on the set point W_{FLO} generated by the control module 632. (See Fig. 8b). Alternative calculations of the exhaust flow set point W_{FLO} may be made. As discussed further above, in alternative embodiments, the main exhaust flow may be adjusted to redirect air flow through the fume hood exhaust dampers 626 and/or 628. Regardless, one feature of this embodiment of the invention is that balance between the supply flow and the main exhaust flow is adjusted in response to a need to vent air or gas through the fume hood exhausts.

Figs. 10a and 10b show the structure and operation of the first fume hood sensor module 640. The first fume hood sensor module 640 effectively measures the concentration of one or more select noxious gasses within the first fume hood 612. It will be appreciated that the second fume hood sensor module 642 has a substantially similar construction and operates in a substantially similar way.

Referring now specifically to Fig. 10a, the first fume hood sensor module 640 has a general construction substantially similar to the module 1200 of Figs. 12a and 12b. To this end, the first fume hood sensor module 640 includes an RF communication circuit 1005, a power management circuit 1010, an processing circuit 1015, an EEPROM 1020, and a sensor suite 1025. Each of the elements of the first fume hood sensor module 640 operates generally as described above in connection with Figs. 12a and 12b.

The first fume hood sensor module 640 includes a gas concentration sensing functionality. The gas may be any of a number of noxious gasses. As discussed further above, various MEMS sensors devices are known that detect the concentration of various gasses. Thus, for example, the sensor suite 1025 may suitable include a plurality of gas-specific sensors. To enable the gas sensing functionality, the EEPROM 1020 includes configuration information identifying that the processing circuit 1015 should obtain gas concentration measurement information for one or more gasses from the MEMS sensor suite 1025. It is noted that the gas sensing functionality should correspond to the types of noxious gas or gasses expected to be generated within the fume hood 612. With the configurable EEPROM 1020, the module 640 may be reconfigured if the type of noxious gas generated within the fume hood 612 changes.

In the alternative, the first fume hood sensor module 640 may include a MEMs-based gas chromatography element in the sensor suite 1025. Such an element can provide gas chromatographic information to the processing circuit 1015. The processing circuit 1015 may then analyze the information for specific gas content. The EEPROM 1020 would provide conriguration information as to which gasses to monitor. A suitable MEMs-based gas chromatography device is the "Lab on a Chip" available from Argon National Laboratories. Others are known in the art.

In yet another embodiment, using gas chromatography or similar gas content analysis, the configuration information of the EEPROM 1020 may identify a template defining breathable air, for example, having specific ranges of oxygen, nitrogen and carbon dioxide. The processing circuit 1015 uses this template to determine whether the oxygen, nitrogen and/or other breathable air gasses are within predefined limits. If not, then X_{G1} would be given a value that indicates the need for additional venting.

In any event, in the exemplary embodiment described herein, the EEPROM 1020 further includes sufficient program instructions or code to carry out the operations illustrated in Fig. 10b and described below.

The RF communication circuit 1005 is preferably configured to communicate with the other elements of the subsystem 114. As discussed above, the RF communication circuit 1005 may suitably be configured to use Bluetooth or another local RF communication protocol.

The operation of the first fume hood sensor module 640 is described with reference to Fig. 10b, which shows an overview of the functions of the processing circuit 1015. With reference to Fig. 10b, in step 1050, the processing circuit 1015 obtains a gas concentration measurement value X_{G1}. To this end, the processing circuit 1015 obtains an analog gas concentration measurement value from the gas concentration sensor element within the MEMS sensor suite 1025 and converts the analog flow measurement value to a digital value representative thereof, X_{G1}.

In step 1055, the processing circuit 1015 provides the gas concentration measurement value X_{G1} to the first fume hood exhaust module 636 via the RF communication circuit 1005.

In embodiments in which the first fume hood sensor module 640 is cnfigured to obtain gas concentration measurements for a *plurality* of different individual gasses, then steps 1050 and 1055 may be repeated for each gas.

The processing circuit 1015 thereafter periodically receives updates of its inputs and recalculates the actuator output signal. In other words, steps 1050 and 1055 are periodically repeated.

Figs. 11a and 11b show the structure and operation of the first fume hood exhaust module 636. The first fume hood exhaust module 636 effectively controls the first fume hood exhaust damper 626 to help vent noxious gasses present within or in the vicinity of the fume hood 612 out of the room 610. The need for venting is based on the concentration measurement value X_{G1} generated by the first fume hood sensor module 640, and a gas concentration set point W_{G1}.

It will be appreciated that the second fume hood exhaust module 638 has a similar construction and operates in substantially the same manner as the first fume hood exhaust module 636.

Referring now specifically to Fig. 11a, the first fume hood exhaust module 636 has a general construction that is substantially similar to the module 1200 of Figs. 12a and 12b. To this end, the first fume hood exhaust module 636 includes an RF communication circuit 1105, a power management circuit 1110, an processing circuit 1115, an EEPROM 1120, and a sensor suite 1125. Each of the elements of the first fume hood exhaust module 636 operates generally as described above in connection with Figs. 12a and 12b.

The first fume hood exhaust module 636 includes a flow sensing functionality, and is further configured to generate an actuator output signal. The actuator output signal may suitably be provided on analog output pin 1115a of the processing circuit 1115. The actuator output signal is an analog output that controls the operation of the actuator for the damper 626. To this end, the analog output pin 1115 a is connected to an external actuator 1117, which in turn controls the position of the damper 626.

To enable the flow sensing functionality, the EEPROM 1120 includes configuration information identifying that the processing circuit 1115 should obtain an air flow measurement information from the MEMS sensor suite 1125. The EEPROM 1120 also includes information identifying the tolerable limits for concentration of the gas, or in other words, the gas concentration set point W_{G1} for the gas x being measured in the first fume hood 612. In the exemplary embodiment described herein, the EEPROM 720 further includes sufficient program instructions or code to carry out the operations illustrated in Fig. 11b and described below.

The RF communication circuit 1105 is preferably configured to communicate with the other elements of the subsystem 114 using a local RF communication protocol.

The operation of the first fume hood exhaust module 636 is described with reference to Fig. 11b, which shows an overview of the functions of the processing circuit 1115. With reference to Fig. 11b, in step 1150, the processing circuit 1115 receives from time to time (via the RF communication circuit 1105) the gas concentration measurement value X_{G1}, which is provided by the first fume hood sensor module 640, as discussed above.

In step 1155, the processing circuit 1115 calculates a first gas concentration control output Y_{G1} based on the measured gas concentration value X_{G1} and the gas concentration set point W_{G1}. To this end, the processing circuit 1115 may use an ordinary PID algorithm, the configuration of which would be known to those of ordinary skill in the art.

In step 1160, the processing circuit 1115 then determines a set point value for the first fume hood exhaust flow, W_{G1FL}, based on the gas concentration control output Y_{G1}. To this end, the processing circuit 1115 may simply set W_{G1FL} = Y_{G1}, if scaling or other adjustments for unit conversion are not required.

In step 1165, the processing circuit 1115 receives a first fume hood exhaust flow measurement X_{G1FL}. To this end, the processing circuit 1115 obtains an analog flow measurement value from the flow sensor element within the MEMS sensor suite 1125 and converts the analog flow measurement value to a digital value representative thereof, X_{G1FL}.

In step 1170, the processing circuit 1115 calculates a first fume hood exhaust damper control output Y_{G1FL} based on the measured flow X_{G1FL} and the set point value W_{G1FL}. Again, the processing circuit 1115 may use an ordinary PID algorithm to perform the calculation.

In step 1175, the processing circuit 1115 provides an actuator output signal corresponding to Y_{G1FL} to its output 1115a, which in turn provides to the actuator 1117 that causes mechanical adjustment of the first fume hood exhaust damper 626.

As with the processing circuit 715 of Fig. 7a, the processing circuit 1115 thereafter periodically receives updates of its inputs and recalculates the actuator output signal. In other words, steps 1150-1175, although not necessarily in strict order. The processing circuit 1115 also communicates the set point W_{G1FL} to the control module 630.

The above operations of the processing circuit 1115 operate to control the venting of gas-laden air through control of the damper 626. The processing circuit 1115 controls the venting based on the measured gas concentration X_{G1} received periodically from the first fume hood sensor module 640 and the desired gas concentration set point W_{G1} stored in the EEPROM 1120. It is noted that the value of W_{G1} may be programmed into the EEPROM 1120 upon configuration of the module 636, or may be received from supervisory devices external to the subsystem 114 via the control module 630. It will also be noted, the control calculation of step 1155 may be carried out in the first fume hood sensor module 640.

One of the advantages of incorporating wireless MEMS modules in a building subsystem or system that includes fume hoods is the reduced wiring requirements over normal fume hood systems. Moreover, by detecting the relative presence of noxious gasses within the fume hood, the fume hood is only vented when noxious gasses are present, or in other words, only as needed. The arrangement thus potentially conserves energy by ventilating only to the extent necessary. It is noted that the fume hood sensor module 640 and/or the fume hood exhaust module 636 may be programmed to detect an alarm condition and provide a wireless (or wire output pin) signal to a visible and/or audible alarm device, not shown.

It will be appreciated that the above described embodiments are merely illustrative, and that those of ordinary skill in the art may readily devise their own adaptations and implementations that incorporate the principles of the present invention and fall within the spirit and scope thereof. For example, control systems or subsystems having any number of fume hoods may be adapted to incorporate the principles of the present invention.

Moreover implementation of the subsystems incorporating features from either or both of subsystems 110 and 114 may be used in building control systems that are not completely wireless. The space control subsystems 110 of Fig. 2 may readily be modified for use in a conventional wired building control system. To this end, my copending application, Attorney Docket No. 2002P01349US01, entitled "Building System With Reduced Wiring Requirements and Apparatus for Use Therein", filed on even date herewith, describes a suitable method for incorporating individual subsystems into current building automation system architecture.

## Claims

1. A method for controlling an environmental aspect of a zone within a building, comprising the steps:
a) generating a setpoint value relating the environmental aspect by a supervisory computer (102);
b) communicating the setpoint value to a hub module (202) using a first wireless communication scheme;
c) obtaining from a MEMS sensor device (218; 238) a process value;
d) wirelessly communicating information based on the process value to the hub module (202) using a second communication scheme, which is different from the first wireless communication scheme; and
e) controlling an actuator (262) responsive to the information.

2. The method of claim 1, wherein the process value is representative of a concentration of a gaseous substance.

3. The method of a preceding claim, wherein the MEMS sensor device is disposed within a fume hood (612; 614).

4. The method of a preceding claim, wherein the hub module (202) includes a control device, and step e) further comprises employing the control device to control the actuator responsive to the information.

5. The method of a preceding claim, wherein the information comprises a control output determined based at least in part on the set point value and the process value.

6. The method of claim 3 wherein in step e) the second communication scheme is used and the controlled actuator is a vent damper actuator.

7. The method of claim 6 further comprising
f) effecting wireless communications to a third device using the second communication scheme, said wireless communications containing second information identifying an air flow characteristic in the vicinity of the vent damper;
g) controlling a second actuator attached to a second damper based on the second information.

8. A controller arrangement (110, 600) for a building control system (100), for carrying out a method according to one of claims 1 to 7,
the controller arrangement (110) including a hub module (202) and at minimum one sensor module (204; 206) having a micro electromechanical system technology (MEMS) sensor device (218; 238) and a local RF communication circuit (210; 230);
the hub module (202) including a network interface (270), a control processor (272) and a RF communication circuit (280) for wireless communication with the sensor module (204);
the network interface (270) is operable for communication with a further controller arrangement (106; 108; 112; 214) of the building control system (100) using a first wireless communication scheme;
the sensor module (204; 206) is operable to generate a process value and to transmit data wirelessly to the hub module (202) using a second communication scheme, which is different from the first wireless communication scheme.

9. The controller arrangement (110; 600) of claim 8, further including an actuator module (208; 632) operably coupled with an actuation element (620) and having a local RF communication circuit (250) for communication with the hub module (202; 630) using the second communication scheme.

10. The controller arrangement (110; 600) according to one of claims 8 to 9, wherein the hub module (202) further including a MEMS sensor device (278).

11. The controller arrangement (110; 600) of claim 10 wherein the RF communication circuit (280) of the hub module (202) is a MEMS local RF communication circuit.

12. The controller arrangement (110; 600) according to one of claims 8 to 11, wherein the MEMS sensor device (218; 238) is a sensor suite incorporating several MEMS sensors whose particular sensing capability is programmable upon installation.

13. The controller arrangement (110; 600) according to one of claims 8 to 12, wherein a control signal for the actuator module (208; 632) is provided by the hub module (208; 632) using wireless communication.

14. The controller arrangement (110; 600) according to one of claims 8 to 13, wherein the sensor module (204; 206) includes a processing device (212, 216; 232, 236) incorporated into the same substrate as the MEMS sensor (218; 238).

15. The controller arrangement (110; 600) according to one of claims 8 to 14, further including a controller operable to obtain the process value generated by the sensor module (204; 206) and operable to provide a control output.

16. The controller arrangement (110; 600) according to one of claims 8 to 15, wherein the sensor module (204; 206) is arranged within a fume hood (612; 614).

17. The controller arrangement (110; 600) according to one of claims 8 to 16, wherein the sensor module (204; 206) includes an air flow sensor operable to generate an air flow process value, and wherein the controller is further operable to provide the control output based in part on the air flow process value.

18. The controller arrangement (110; 600) according to one of claims 8 to 17, wherein the sensor module (204; 206) is further operable to provide information to a further module (208) using the second communication scheme.

19. The controller arrangement (110; 600) according to one of claims 8 to 18, wherein the hub module (202) includes a sensor suite incorporating several MEMS. sensors whose particular sensing capability is programmable upon installation.

20. The controller arrangement (110; 600) according to one of claims 8 to 19, wherein the first communication scheme includes a packet-hopping wireless protocol.

21. The controller arrangement (110; 600) according to one of claims 8 to 20, wherein the second communication scheme is a short-range RF communication scheme.

## Patentansprüche

1. Verfahren zum Steuern eines Umweltaspekts in einer Zone innerhalb eines Gebäudes, welches folgende Schritte umfasst:
a) Erzeugen eines Sollwerts für den Umweltaspekt durch einen Überwachungsrechner (102),
b) Übermitteln des Sollwerts an ein Zentralmodul (202) mit Hilfe eines ersten Drahtloskommunikationsschemas,
c) Abrufen eines Prozesswertes von einer MEMS-Sensoreinrichtung (218, 238),
d) drahtloses Übermitteln von auf dem Prozesswert beruhenden Informationen an das Zentralmodul (202) mit Hilfe eines zweiten Drahtloskommunikationsschemas, das sich von dem ersten Drahtloskommunikationsschema unterscheidet, und
e) Steuern eines Stellglieds (262) als Reaktion auf die Informationen.

2. Verfahren nach Anspruch 1, bei dem der Prozesswert eine Konzentration einer gasförmigen Substanz darstellt.

3. Verfahren nach einem der vorhergehenden Ansprüche, bei dem sich die MEMS-Sensoreinrichtung in einer Abzugshaube (612, 614) befindet.

4. Verfahren nach einem der vorhergehenden Ansprüche, bei dem das Zentralmodul (202) eine Steuereinrichtung aufweist und Schritt e) des Weiteren den Einsatz der Steuereinrichtung zum Steuern des Stellglieds als Reaktion auf die Informationen umfasst.

5. Verfahren nach einem der vorhergehenden Ansprüche, bei dem die Informationen einen Stellwert umfassen, der zumindest teilweise anhand des Sollwerts und des Prozesswerts ermittelt wird.

6. Verfahren nach Anspruch 3, bei dem in Schritt e) das zweite Kommunikationsschema verwendet wird und es sich bei dem gesteuerten Stellglied um ein Stellglied für eine Abzugsklappe handelt.

7. Verfahren nach Anspruch 6, das des Weiteren Folgendes umfasst:
f) Bewirken drahtloser Kommunikation mit einer dritten Einrichtung mit Hilfe des zweiten Kommunikationsschemas, wobei in der drahtlosen Kommunikation zweite Informationen enthalten sind, die ein Luftstrommerkmal in der Nähe der Abzugsklappe angeben,
g) Steuern eines an einer zweiten Abzugsklappe angebrachten zweiten Stellglieds anhand der zweiten Informationen.

8. Steueranordnung (110, 600) für ein Gebäudeleitsystem (100) zum Ausführen eines Verfahrens nach einem der Ansprüche 1 bis 7,
wobei die Steueranordnung (110) ein Zentralmodul (202) und mindestens ein Sensormodul (204, 206) mit einer MEMS-Sensoreinrichtung (218, 238) (MEMS: MicroElectroMechanical System) und einem lokalen HF-Kommunikationsschaltkreis (210, 230) aufweist,
wobei das Zentralmodul (202) eine Netzwerkschnittstelle (270), einen Steuerprozessor (272) und einen HF-Kommunikationsschaltkreis (280) für die drahtlose Kommunikation mit dem Sensormodul (204) aufweist,
wobei die Netzwerkschnittstelle (270) unter Verwendung eines ersten Drahtloskommunikationsschemas für die Kommunikation mit einer weiteren Steueranordnung (106, 108, 112, 214) des Gebäudeleitsystems (100) benutzt werden kann,
wobei das Sensormodul (204, 206) für die Erzeugung eines Prozesswerts und für das drahtlose Übertragen von Daten an das Zentralmodul (202) mit Hilfe eines zweiten Drahtloskommunikationsschemas verwendet werden kann, das sich von dem ersten Drahtloskommunikationsschema unterscheidet.

9. Steueranordnung (110, 600) nach Anspruch 8, die des Weiteren ein Stellgliedmodul (208, 632) aufweist, das mit einem Stellelement (620) wirkverbunden ist und einen lokalen HF-Kommunikationsschaltkreis (250) für die Kommunikation mit dem Zentralmodul (202, 630) mit Hilfe des zweiten Kommunikationsschemas besitzt.

10. Steueranordnung (110, 600) nach einem der Ansprüche 8 bis 9, bei der das Zentralmodul (202) des Weiteren eine MEMS-Sensoreinrichtung (278) aufweist.

11. Steueranordnung (110, 600) nach Anspruch 10, bei der es sich bei dem HF-Kommunikationsschaltkreis (280) des Zentralmoduls (202) um einen lokalen MEMS-HF-Kommunikationsschaltkreis handelt.

12. Steueranordnung (110, 600) nach einem der Ansprüche 8 bis 11, bei der es sich bei der MEMS-Sensoreinrichtung (218, 238) um ein Sensorpaket mit mehreren MEMS-Sensoren handelt, deren jeweiliges Erfassungsvermögen bei der Installation programmiert werden kann.

13. Steueranordnung (110, 600) nach einem der Ansprüche 8 bis 12, bei der von dem Zentralmodul (202, 630) mit Hilfe drahtloser Kommunikation ein Steuersignal für das Stellgliedmodul (208, 632) bereitgestellt wird.

14. Steueranordnung (110, 600) nach einem der Ansprüche 8 bis 13, bei der das Sensormodul (204, 206) eine Verarbeitungseinrichtung (212, 216; 232, 236) aufweist, die in das gleiche Substrat eingebaut ist wie der MEMS-Sensor (218, 238).

15. Steueranordnung (110, 600) nach einem der Ansprüche 8 bis 14, die des Weiteren eine Steuerung aufweist, welche den vom Sensormodul (204, 206) erzeugten Prozesswert abrufen und einen Stellwert bereitstellen kann.

16. Steueranordnung (110, 600) nach einem der Ansprüche 8 bis 15, bei der das Sensormodul (204, 206) in einer Abzugshaube (612, 614) angeordnet ist.

17. Steueranordnung (110, 600) nach einem der Ansprüche 8 bis 16, bei der das Sensormodul (204, 206) einen Luftstromsensor aufweist, der einen Luftstrom-Prozesswert erzeugen kann, und die Steuerung des Weiteren den Stellwert teilweise anhand des Luftstrom-Prozesswerts bereitstellen kann.

18. Steueranordnung (110, 600) nach einem der Ansprüche 8 bis 17, bei der das Sensormodul (204, 206) des Weiteren für das Bereitstellen von Informationen an ein weiteres Modul (208) mit Hilfe des zweiten Kommunikationsschemas verwendet werden kann.

19. Steueranordnung (110, 600) nach einem der Ansprüche 8 bis 18, bei der das Zentralmodul (202) ein Sensorpaket mit mehreren MEMS-Sensoren aufweist, deren jeweiliges Erfassungsvermögen bei der Installation programmiert werden kann.

20. Steueranordnung (110, 600) nach einem der Ansprüche 8 bis 19, bei der zum ersten Kommunikationsschema ein Paketsprung-Drahtlosprotokoll gehört.

21. Steueranordnung (110, 600) nach einem der Ansprüche 8 bis 20, bei der es sich beim zweiten Kommunikationsschema um ein HF-Kommunikationsschema von geringer Reichweite handelt.

## Revendications

1. Procédé de commande d'un aspect environnemental d'une zone dans un bâtiment, comprenant les stades dans lesquels :
a ) on produit une valeur de consigne se rapportant à l'aspect environnemental par un ordinateur ( 102 ) de supervision ;
b ) on communique la valeur de consigne à un module ( 202 ) de concentrateur en utilisant un premier schéma de communication sans fil ;
c ) on obtient une valeur de processus à partir d'un dispositif ( 218 ;238 ) de capteur MEMS ;
d ) on communique sans fil de l'information et sur la base de la valeur du processus au module ( 202 ) de concentrateur en utilisant un deuxième schéma de communication qui est différent du premier schéma de communication sans fil ; et
e ) on commande un actionneur ( 262 ) en réaction à l'information.

2. Procédé suivant la revendication 1, dans lequel la valeur de processus est représentative d'une concentration d'une substance gazeuse.

3. Procédé suivant une revendication précédente, dans lequel le dispositif de capteur MEMS est disposé dans une hotte ( 612 ; 614 ) à fumée.

4. Procédé suivant une revendication précédente, dans lequel le module ( 202 ) de concentrateur comprend un dispositif de commande et le stade e ) comprend en outre l'emploi du dispositif de commande pour commander l'actionneur en réaction à l'information.

5. Procédé suivant une revendication précédente, dans lequel l'information comprend une sortie de commande déterminée sur la base au moins en partie de la valeur de consigne et de la valeur de processus.

6. Procédé suivant la revendication 3, dans lequel dans le stade e ) on utilise le deuxième schéma de communication et l'actionneur commandé est un actionneur de registre de ventilation.

7. Procédé suivant la revendication 6, dans lequel en outre
f) on effectue des communications sans fil vers un troisième dispositif en utilisant le deuxième schéma de communication, la communication sans fil contenant une deuxième information identifiant une caractéristique d'écoulement d'air au voisinage du registre de ventilation,
g) on commande le deuxième actionneur fixé à un deuxième registre sur la base de la deuxième information.

8. Dispositif ( 110, 600 ) de commande d'un système ( 100 ) de commande de bâtiment pour effectuer un procédé suivant l'une des revendications 1 à 7,
le dispositif ( 110 ) de commande comprenant un module ( 202 ) de concentrateur et au minimum un module ( 204;206 ) de capteur ayant un dispositif ( 218 ; 238 ) de capteur à technologie de système micro-électromécanique ( MEMS ) et un circuit ( 210 ; 230 ) local de communication RF,
le module ( 202 ) de concentrateur comprenant une interface ( 270 ) de réseau, un processeur ( 272 ) de commande et un circuit ( 280 ) de communication RF pour une communication sans fil avec le module ( 204 ) de capteur,
l'interface ( 270 ) de réseau pouvant fonctionner pour une communication avec un autre dispositif ( 106 ;108 ;112 ;214 ) de commande du système ( 100 ) de commande du bâtiment en utilisant un premier schéma de communication sans fil,
le module ( 204 ;206 ) de capteur pouvant fonctionner pour produire une valeur de processus et pour transmettre des données sans fil au module ( 202 ) de concentrateur en utilisant un deuxième schéma de communication qui est différent du premier schéma de communication sans fil.

9. Dispositif ( 110 ;600 ) de commande suivant la revendication 8, comprenant en outre un module ( 208 ; 632 ) d'actionneur couplé fonctionnellement à un élément ( 620 ) d'actionnement et ayant un circuit ( 250 ) local de communication RF pour communiquer avec le module ( 202 ; 630 ) de concentrateur en utilisant le deuxième schéma de communication.

10. Dispositif ( 110 ;600 ) de commande suivant l'une des revendications 8 à 9, dans lequel le module ( 202 ) de concentrateur comprend en outre un dispositif ( 278 ) de capteurs MEMS.

11. Dispositif ( 110 ; 600 ) de commande suivant la revendication 10, dans lequel le circuit ( 280 ) de communication RF du module ( 202 ) de concentrateur est un circuit local de communication RF MEMS.

12. Dispositif ( 110 ;600 ) de commande suivant l'une quelconque des revendications 8 à 11, dans lequel le dispositif ( 218 ;238 ) de capteur MEMS est une suite de capteur incorporant plusieurs capteurs MEMS dont l'aptitude particulière de détection peut être programmée après montage.

13. Dispositif ( 110 ;600 ) de commande suivant l'une quelconque des revendications 8 à 12, dans lequel un signal de commande du module ( 208 ;632 ) d'actionneur est fourni par le module ( 208 ; 632 ) de concentrateur en utilisant une communication sans fil.

14. Dispositif ( 110 ; 600 ) de commande suivant l'une quelconque des revendications 8 à 13, dans lequel le module ( 204 ; 206 ) de capteur comprend un dispositif ( 212 ;216 ;232 ; 236 ) de traitement incorporé dans le même substrat que le capteur ( 218 ; 238 ) MEMS.

15. Dispositif ( 110 ;600 ) de commande suivant l'une quelconque des revendications 8 à 14, comprenant en outre un dispositif de commande pouvant fonctionner pour obtenir la valeur de processus produite par le module ( 204 ;206 ) de capteur et pouvant fonctionner pour fournir une sortie de commande.

16. Dispositif ( 110 ; 600 ) de commande suivant l'une quelconque des revendications 8 à 15, dans lequel le module ( 204 ;206 ) de capteur est disposé dans une hotte ( 612 ; 614 ) à fumée.

17. Dispositif ( 110 ;600 ) de commande suivant l'une des revendications 8 à 16, dans lequel le module ( 204 ; 206 ) de capteur comprend un capteur d'écoulement d'air pouvant fonctionner pour produire une valeur de processus d'écoulement d'air et dans lequel le dispositif de commande peut fonctionner en outre pour fournir la sortie de commande sur la base en partie de la valeur de processus d'écoulement d'air.

18. Dispositif ( 110 ;600 ) de commande suivant l'une des revendications 8 à 17, dans lequel le module ( 204 ; 206 ) de capteur peut fonctionner en outre pour fournir de l'information à un autre module ( 208 ) en utilisant le deuxième schéma de communication.

19. Dispositif ( 110 ;600 ) de commande suivant l'une des revendications 8 à 18, dans lequel le module ( 202 ) de concentrateur comprend une suite de capteur incorporant plusieurs capteurs MEMS dont l'aptitude particulière à la détection peut être programmée après montage.

20. Dispositif ( 110 ;600 ) de commande suivant l'une des revendications 8 à 19, dans lequel le premier schéma de communication comprend un protocole sans fil à bond de paquets.

21. Dispositif ( 110 ;600 ) de commande suivant l'une des revendications 8 à 20, dans lequel le deuxième schéma de communication est un schéma de communication RF à courte distance.
